(19) Europäisches Patentamt
European Patent Office
Office européen des brevets

(11) **EP 3 208 638 A1**

(12) **EUROPEAN PATENT APPLICATION**
published in accordance with Art. 153(4) EPC

(43) Date of publication:
**23.08.2017 Bulletin 2017/34**

(51) Int Cl.:
*G01W 1/10* [(2006.01)]  *B60T 8/172* [(2006.01)]
*G08G 1/01* [(2006.01)]  *G08G 1/13* [(2006.01)]

(21) Application number: **15851287.1**

(22) Date of filing: **14.10.2015**

(86) International application number:
**PCT/JP2015/079029**

(87) International publication number:
**WO 2016/060161 (21.04.2016 Gazette 2016/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **14.10.2014 JP 2014210322**

(71) Applicant: **Bridgestone Corporation**
**Tokyo 104-8340 (JP)**

(72) Inventors:
• **HANATSUKA, Yasushi**
**Tokyo 104-8340 (JP)**
• **NAKAZAWA, Kazuma**
**Tokyo 104-8340 (JP)**
• **WAKAO, Yasumichi**
**Tokyo 104-8340 (JP)**

(74) Representative: **Oxley, Robin John George**
**Marks & Clerk LLP**
**90 Long Acre**
**London WC2E 9RA (GB)**

(54) **ROAD SURFACE STATE PREDICTION METHOD AND ROAD SURFACE STATE PREDICTION SYSTEM**

(57)  The invention provides a method for accurately predicting a road surface condition at a location within a predetermined range. To that end, the road surface conditions at the location within the predetermined range are predicted using road surface estimation decision values calculated using vehicular information, which is the information on the behavior of a vehicle $W_i$ during travel obtained by an on-board sensor mounted on the vehicle, or estimated road surface conditions estimated using the road surface estimation decision values. In doing so, the road surface condition at the location within the predetermined range is predicted based on the road surface estimation decision values calculated for the location within the predetermined range or the time-dependent changes in the estimated road surface conditions.

FIG. 6

**Description**

BACKGROUND OF THE INVENTION

1. Field of the Invention

The present invention relates to a method for predicting a condition of a road surface on which a vehicle is traveling, and, more particularly, to a method for predicting a road surface condition using road surface condition data estimated by vehicles traveling through a location within a predetermined range and vehicular information.

2. Description of the Related Art

In order to raise the travel safety of a vehicle, it is desired to accurately estimate the condition of the road surface on which the vehicle is traveling and to have the information fed back to vehicle control. If the road surface condition can be estimated, the safety of vehicular driving can be enhanced markedly since an advanced control of ABS braking, for instance, can be effected before the driver initiates a danger-avoiding control, such as braking or steering.
As methods having been proposed for estimating the condition of a road surface under a traveling vehicle, there are methods for estimating the condition of a road surface by detecting the vibration of the tire of the traveling vehicle and estimating the road surface condition from the time-series waveform of the detected tire vibration (see Patent Documents 1 to 3, for instance) and methods for estimating a road surface condition from a detected sound pressure level of tire noise by detecting tire noise arising from a tire (see Patent Document 4, for instance).

CONVENTIONAL ART DOCUMENT

Patent Document

Patent Document 1: Japanese Unexamined Patent Application Publication No. 2014-35279
Patent Document 2: Japanese Unexamined Patent Application Publication No. 2011-242303
Patent Document 3: Japanese Unexamined Patent Application Publication No. 2003-182476
Patent Document 4: Japanese Unexamined Patent Application Publication No. 8-261993

SUMMARY OF THE INVENTION

Problem to be Solved by the Invention

However, the known technologies as listed above allow prediction of the condition of a road surface on which a vehicle is traveling, but find it difficult to predict changes in road surface conditions for the location within a predetermined range from the estimation results of road surface conditions.
The present invention has been made to solve the foregoing problems, and an object of the invention is to provide a method for accurately predicting a road surface condition at a location within a predetermined range.

Means for Solving the Problem

A method for predicting a road surface condition according to an embodiment of the present invention provides a method including the steps of obtaining vehicular information, which is information on the behavior of a vehicle during travel by an on-board sensor mounted on the vehicle and predicting a road surface condition at a location within a predetermined range, using road surface estimation decision values to be used in the estimation of road surface conditions, which are calculated using the vehicular information or estimated road surface conditions estimated using the road surface estimation decision values. In the step of predicting a road surface condition, predicted incidence rates $S_{Rp}$ for respective road surface conditions, which are the incidence rates of road surface conditions at the location within the predetermined range, are calculated from time-dependent changes in the road surface estimation decision values calculated using the vehicle information obtained by the vehicles having passed the location within the predetermined range or time-dependent changes in the estimated road surface conditions, and then the road surface condition at the location within the predetermined range is predicted from the calculated predicted incidence rates $S_{Rp}$.

BRIEF DESCRIPTION OF THE DRAWINGS

FIG. 1 is a diagram showing a configuration of a road surface condition predicting system according to the first embodiment of the invention.
FIG. 2 is an illustration showing an example of location of an acceleration sensor.
FIG. 3 is a diagram showing an example of a road surface condition estimating means and a diagram showing how to calculate feature vectors.
FIG. 4 is an illustration showing data classified and stored in the data storage means of a server.
FIG. 5 is diagrams showing actual statistical map $M_{-k}$ and an example of a prediction map of road surface conditions.
FIG. 6 is a flowchart showing a method for predicting a road surface condition according to the first embodiment of the invention.
FIG. 7 is a diagram showing a configuration of a road surface condition predicting system according to the second embodiment of the invention.
FIG. 8 is illustrations showing examples of weather models.
FIG. 9 are graphs showing incidence rates of road surface conditions dependent on weather and temperature.
FIG. 10 is a diagram showing predicted values of road surface conditions corrected using a weather model.
FIG. 11 is a diagram showing a configuration of a road surface condition predicting system according to the third embodiment of the invention.
FIG. 12 is a diagram showing predicted values of road surface conditions corrected using the degree of matching and weather model calculated using the reference maps of respective road surface conditions.
FIG. 13 is a diagram showing a configuration of a road surface condition predicting system according to the fourth embodiment of the invention.
FIG. 14 is a diagram showing the predicted values of road surface conditions calculated using transition models.
FIG. 15 is a diagram showing a method for predicting a road surface condition according to the fifth embodiment of the invention.
FIG. 16 is a diagram showing a method for predicting a road surface condition according to the fifth embodiment of the invention.

BEST MODE FOR CARRYING OUT THE INVENTION

First Embodiment

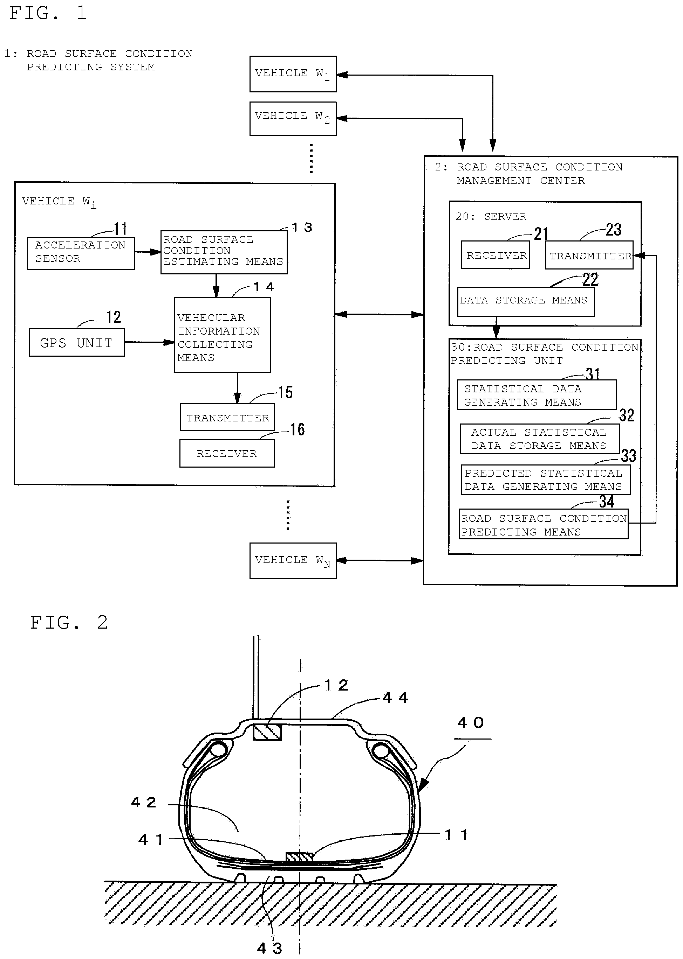

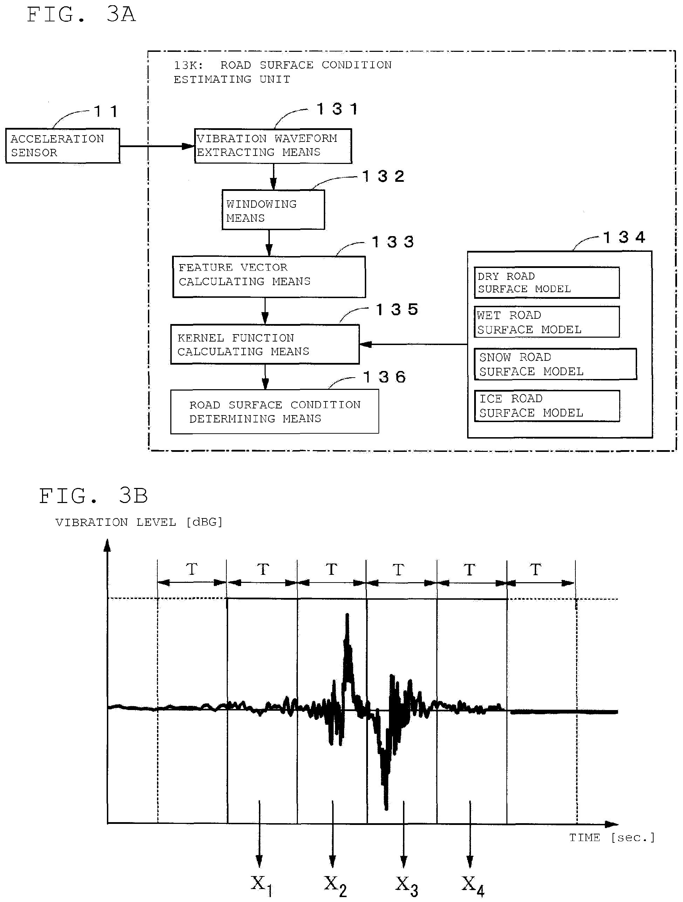

FIG. 1 is a functional block diagram showing a configuration of a road surface condition predicting system according to the first embodiment of the invention. The system includes vehicles $W_1$ to $W_N$, and each of the vehicles $W_1$ to $W_N$ includes an acceleration sensor 11 as an on-board sensor, a GPS unit 12, a road surface condition estimating means 13, a vehicular information collecting means 14, a transmitter 15, and a receiver 16.
A server 20 includes a receiver 21, a data storage means 22, and a transmitter 23. A road surface condition predicting unit 30 predicts road surface conditions at the location within a predetermined range from the time-dependent changes in estimated road surface conditions estimated by a plurality of vehicles W at a plurality of times at the location within the predetermined range.
It is to be noted that the "number N of vehicles" is a "gross total of vehicles". That is, when there is a plurality of data from a single vehicle within a predetermined space of time and at the location within a predetermined range, the plurality of these data are processed as separate data.
The server 20 and the road surface condition predicting unit 30 are installed in a road surface condition management center 2.
The road surface condition estimating means 13, the vehicular information collecting means 14, and the road surface condition predicting unit 30 are constituted, for instance, by computer software.
The acceleration sensor 11 is disposed approximately in the middle portion on the tire air chamber 42 side of the inner liner 41 of the tire 40 as shown in FIG. 2. The acceleration sensor 11 detects the vibration (tire vibration) inputted to the tread 43 of the tire 40 from the road surface R.
The GPS unit 12, equipped with a not-shown GPS antenna and receiver, acquires position data of the vehicles $W_i$ and calculates the travel speeds of the vehicles from the position data thereof.
The road surface condition estimating means 13 estimates the road surface under a traveling vehicle to be any one of DRY road surface, WET road surface, SNOW road surface, and ICE road surface, using the time-series waveform of tire vibration detected by the acceleration sensor 11. As a road surface condition estimating means 13 as mentioned above, there may be one which includes a vibration waveform extracting means 131 for extracting time-series waveforms of tire vibration from the acceleration sensor 11, a windowing means 132, a feature vector calculating means 133, a storage means 134 for storing four road surface models, a kernel function calculating means 135, and a road surface condition determining means 136 as shown in FIG. 3A. Such a road surface condition estimating unit 13K may calculate respective feature vectors $X_k$ ($a_{k1}$, $a_{k2}$, ......, $a_{km}$) having vibration levels ($a_{k1}$ to $a_{km}$) in a plurality of specific frequency bands as the components from the time-series waveforms of the respective time windows extracted by windowing the time-series waveform of tire vibration at predetermined time width T as shown in FIG. 3B, calculates the kernel functions from these feature vectors and the feature vectors for the respective road surface conditions having been determined in advance, and estimates a road surface condition to be any one of DRY road surface, WET road surface, SNOW road surface, and ICE road surface from the values of identification (discriminant) functions using the kernel functions. It is to be noted that the feature vectors for the respective road surface conditions are the feature vectors having a plurality of specific frequency bands as the components which were determined by a test vehicle traveling on DRY road surface, WET road surface, SNOW road surface, and ICE road surface, respectively.

Note that the road surface condition estimating means 13 may be installed inside the tire 40 or on the vehicle body. When the road surface condition estimating means 13 is installed on the vehicle body, the arrangement should preferably be such that the data of the acceleration waveform detected by the acceleration sensor is not sent from the tire 40 side to the vehicle body side, and a calculating unit is provided on the tire 40 side and band values to be used in the estimation of road surface conditions, such as the vibration levels in specific frequency bands detected from the acceleration waveform, or calculated values of the band values are sent to the road surface condition estimating means 13.

The vehicular information collecting means 14 collects the road surface conditions estimated by the road surface condition estimating means 13 (hereinafter referred to as "estimated road surface conditions") and the position data of the vehicle obtained by the GPS unit 12 and sends them as vehicular information, together with the vehicle ID for identifying the vehicle, to the transmitter 15. The vehicular information includes the vehicle ID and the data on the time when the vehicular information is obtained (time data) . It is to be noted that the time data to be used may be the time of extracting the time-series waveform of acceleration, the time of obtaining the position data, or the time of transmitting the data. These times, which are almost simultaneous, pose no problem as time data.

The transmitter 15 transmits the vehicular information, together with the estimated road surface condition data, position data of the vehicle, and vehicle ID for identifying the vehicle collected by the vehicular information collecting means 14, from a not-shown transmission antenna to the server 20 in the road surface condition management center 2.

The receiver 16 receives prediction data on the road surface condition at the location within the predetermined range predicted by the road surface condition predicting unit 30 in the road surface condition management center 2 and transmitted from the transmitter 23 of the server 20. It is to be noted that the received prediction data on a road surface condition may be displayed on a monitor provided in the vehicle so that the driver may be informed of the predicted result of the road surface condition for the location within the predetermined range.

Also, the predicted result of the road surface condition may be fed back to vehicle control, thereby improving the travel safety of the vehicle.

The server 20 receives the vehicular information, including the data on estimated road surface conditions, sent from the respective vehicles $W_1$ (i = 1 to N) by its receiver 21, classifies these data into data at the respective times for the location within the predetermined range, stores them in the data storage means 22, and transmits the prediction data on the road surface condition for the location within the predetermined range predicted by the road surface condition predicting unit 30 to the registered vehicles.

The vehicular information of the respective vehicles $W_1$ is classified and stored in the data storage means 22.

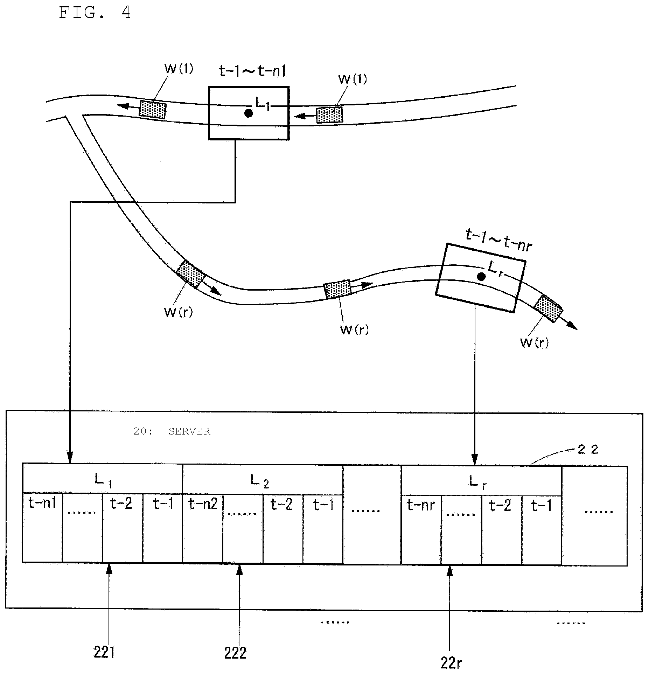

More specifically, as shown in FIG. 4, data obtained respectively by the plurality of vehicles $W(1)_j$ (j = 1 to $m_1$) at a plurality of times $t(1)_k$ ($t_{-n1}$ to $t_{-1}$) at the predetermined location $L_1$ are stored in the storage area 221 of the data storage means 22. And data obtained respectively by the plurality of vehicles $W(2)_j$ (j = 1 to $m_2$) at a plurality of times $t(2)_k$ (k = $-n_2$ to -1) at the predetermined location $L_2$ are stored in the storage area 222. In this manner, data obtained respectively by a plurality of vehicles $W(r)_j$ (j = 1 to $m_r$) at a plurality of times $t(r)_k$ (k = $-n_r$ to -1) at predetermined locations $L_r$ are stored in the storage area 22r.

It should be understood here that $m_1 + m_2 + ...... + m_r + ...... = N$. Note also that the number $n_r$ of the times at which data is obtained may vary with locations $L_r$ or be the same for all the locations $L_r$.

The data at the predetermined locations $L_r$ are stored in order of time.

It is to be noted that the data at time $t_k$ refers to the data obtained within a predetermined time width $\Delta t_k$ including time $t_k$ (e.g., $t_k - \Delta t_k/2 \leqq t \leqq t_k + \Delta t_k/2$). The predetermined time width $\Delta t_k$ may not necessarily be fixed, but may vary with the predetermined locations.

The predetermined time width $\Delta t_k$ may be 1 to 5 minutes, for instance. Also, the "predetermined range" as used herein refers to a range that includes a pre-set location on a road map. Designation of a predetermined range may be made using a grid of appropriate size on a navigation road map as shown in FIG. 4, for instance. The arrangement like this is preferable because it will ensure consistency of the vehicle positions of vehicles $W_i$, or more specifically vehicles $W(r)_j$ in relation to the server 20.

Also, the registered vehicles include not only the vehicles $W_i$ carrying the road surface condition estimating means 13, but also any vehicles in communication with the server 20.

The road surface condition predicting unit 30 includes a statistical data generating means 31, an actual statistical data storage means 32, a predicted statistical data generating means 33, and a road surface condition predicting means 34. The road surface condition predicting unit 30 predicts road surface conditions at the location $L_r$ within a predetermined range at future time $t_p$ (p > 0), using the vehicular information obtained at $t_{-n}$ to time $t_{-1}$.

The statistical data generating means 31 takes out the $m_r$ units of data on estimated road surface conditions obtained at the location $L_r$ within the predetermined range at time $t(r)_k$ (k = -$n_1$ to -1) before the present time to from the data stored in the data storage means 22 of the server 20, counts the numbers of the vehicles having estimated the DRY road surface, WET road surface, SNOW road surface, and ICE road surface, respectively, using these data, and generates maps tallying up the incidence rates of the estimated road surface conditions R at the location $L_r$ within the predetermined range at time $t(r)_k$ for each of the estimated road surface conditions R (R: DRY road surface, WET road surface, SNOW road surface, and ICE road surface) (hereinafter referred to as actual statistical data $M(r)_k$). It is to be noted that when a plurality of data are sent from a single vehicle within a predetermined space of time and at a location within a predetermined range, the data are processed as those from separate vehicles. In such a case, the number of vehicles is the gross total of the vehicles. Note also that whether the data is from the same vehicle or not can be determined by referring to the vehicle ID.

Prediction of a road surface condition is done for each of the locations $L_r$. However, the following description will be given of a case where the road surface condition at a location $L_r$ is predicted. Note therefore that hereinbelow the suffix r indicating the location $L_r$ is omitted such that the vehicle passing through the location $L_r$ at time $t_k$ is denoted by $W_j$ (j = 1 to m), and the actual statistical data by $M_k$.

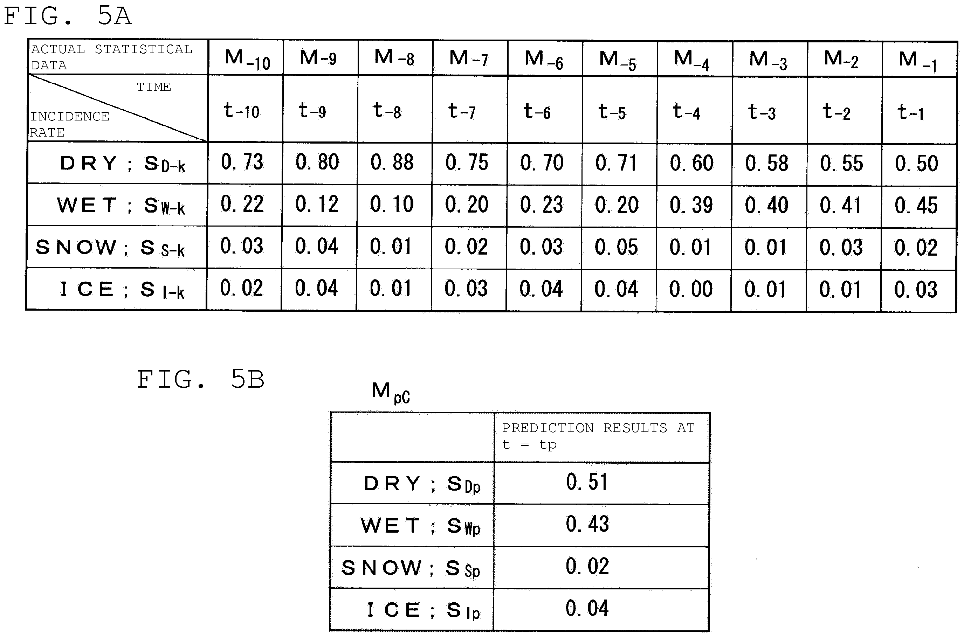

FIG. 5A is a table showing examples of actual statistical data $M_k$, and FIG. 5B is a table of predicted statistical data $M_{pC}$ showing prediction results of road surface conditions to be described later.

The actual statistical data $M_k$ are the incidence rates $S_{Rk}$ of estimated road surface conditions R (R: DRY, WET, SNOW, ICE) at time $t_k$ (k = -$n_1$ to -1) calculated for each of the road surface conditions R. The predicted statistical data $M_{pC}$ are the predicted values $S_{Rp}$ of incidence rates at a future time $t_p$ (p > 0) (hereinafter referred to as predicted incidence rates) calculated for each of the road surface conditions R.

The incidence rates $S_{Rk}$ are calculated by the formula: $S_{Rk}$ = (count of an estimated road surface condition R) / (total count). Note that the actual statistical data $M_k$ is generated for each of the times $t_k$.

Generation of the actual statistical data $M_k$ is normally done immediately after the storage of estimated road surface condition data at time $t_{-1}$, which is the time immediately before the time $t_p$ at which a prediction is made.

The actual statistical data storage means 32 stores the actual statistical data $M_k$ generated by the statistical data generating means 31 in order of time.

The predicted statistical data generating means 33 generates the predicted statistical data $M_{pC}$ for the location $L_r$ within the predetermined range at a future time $t_p$ (p > 0), using a plurality (10 here) of actual statistical data $M_k$ arranged in a time series as shown in FIG. 5A.

More specifically, the time-dependent changes in the incidence rates $S_{Rk}$ of estimated road surface conditions R at times $t_{-10}$ to $t_{-1}$ are respectively approximated by the n-th functions $G_r(t)$ ( n $\geq$ 3), and the function values $G_R(t_p)$ of the approximate functions (n-th functions) at t = $t_p$ are derived respectively. Then the predicted statistical data $M_{pC}$ are generated by calculating the predicted incidence rates $S_{Rp}$ of road surface conditions R at time $t_p$, using these four function values $G_R(t_p)$, respectively.

The predicted incidence rates $S_{Rp}$ are derived by dividing the function values $G_R(t_p)$ of the respective road surfaces R by the sum ($\Sigma_R G_R(t_p)$) of the four function values $G_R(t_p)$.

That is, the predicted incidence rate of the DRY road surface is calculated by $S_{Dp} = G_D(t_p) /\Sigma_R G_R(t_p)$. And the predicted incidence rate of the WET road surface is calculated by $S_{Wp} = G_w(t_p) /\Sigma_R G_R(t_p)$. Likewise, the predicted incidence rate of the SNOW road surface is calculated by $S_{Sp} = G_s(t_p) /\Sigma_R G_R(t_p)$. And the predicted incidence rate of the ICE road surface is calculated by $S_{Ip} = G_I(t_p) /\Sigma_R G_R(t_p)$. The sum of the predicted incidence rates $S_{Dp}$, $S_{Wp}$, $S_{Sp}$, and $S_{Ip}$ is 1.

FIG. 5B shows an example of predicted statistical data $M_{pC}$ representing prediction results of road surface conditions.

The road surface condition predicting means 34 predicts the road surface condition R to be any one of the DRY road surface, WET road surface, SNOW road surface, and ICE road surface. More specifically, the road surface condition predicting means 34 selects an estimated road surface condition R indicating the highest predicted incidence rate $S_{Rp}$ (DRY road surface in FIG. 5B) from the predicted statistical data $M_{pC}$ and predicts this selected road surface condition as the road surface condition $R(t_p)$ at the location $L_k$ within the predetermined range at time $t_p$.

By repeating the prediction of a road surface condition using prediction results of road surface conditions like this, the road surface condition $R(t_q)$ at a further future time tq ($t_q$ > $t_p$) can be predicted.

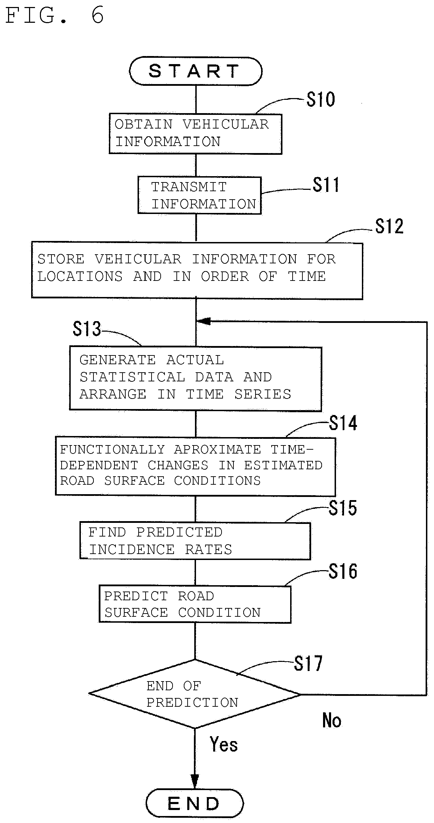

Next, the operation of a road surface condition predicting system 1 is described with reference to the flowchart of FIG. 6.

Firstly, estimated road surface conditions and vehicular information, such as vehicle positions, are obtained by the participating vehicles $W_i$ (i = 1 to N) (step S10) . And these pieces of information, together with the vehicle IDs and data of acquisition times, are transmitted to the server 20 in the road surface condition management center 2 (step S11).

Next, at the server 20, the estimated road surface condition data and vehicular information are stored for each of the predetermined locations $L_r$ in order of acquisition times (step S12).

Then, at the statistical data generating means 31, the actual statistical data $M_k$, which are the statistical data of the counts of vehicles having estimated a DRY road surface, vehicles having estimated a WET road surface, vehicles having estimated a SNOW road surface, and vehicles having estimated an ICE road surface at the predetermined location $L_r$, are generated for each of times $t_k$ (k = -n to -1), and they are arranged in a time series (step S13).

Next, the time-dependent changes in the incidence rates $S_{Rk}$ of estimated road surface conditions being R at times $t_{-n}$ to $t_{-1}$ are respectively approximated by the n-th functions $G_r(t)$ (step S14), and the function values $G_R(t_p)$, which are the values of n-th functions $G_R(t)$) at a future time $t_p$, are derived, respectively. And the predicted incidence rates $S_{Rp}$ of road surface conditions R at time $t_p$, are derived using these four function values $G_R(t_p)$, respectively (step S15) .

And the estimated road surface condition R indicating the highest value of predicted incidence rates $S_{Rp}$ is predicted to be the road surface condition $R(t_p)$ at time $t_p$ (step P16) .

Finally, the information on the determined road surface condition is transmitted to the registered vehicles.

It is to be noted that when a road surface condition at a location $L_{r'}$, which is different from location $L_r$, is to be predicted, the procedure returns to step S13 and the prediction of the road surface condition is continued.

As described above, in the first embodiment, time-series waveforms of vibration of a running tire are detected by the acceleration sensor 11 provided on each of a plurality of vehicles $W_i$ traveling through the location within a predetermined range. And using the information, the road surface conditions R at a plurality of times $t_k$ (k = -n to -1) are estimated, respectively. At the same time, the time-dependent changes in these estimated road surface conditions are respectively approximated by the n-th functions $G_r(t)$, and from the function values $G_R(t_p)$ of the n-th functions $G_R(t)$, the predicted incidence rates $S_{Rp}$ of road surface conditions R at a future time $t_p$ at the location within the predetermined range are derived. And the future road surface condition $R(t_p)$ is predicted from the magnitudes of the predicted incidence rates $S_{Rp}$. Accordingly, the future road surface condition can be predicted with excellent accuracy.

It is to be noted that, in the first embodiment, the predicted incidence rates $S_{Rp}$ of road surface conditions R at time $t_p$ are found by approximating the time-dependent changes in road surface conditions by the n-th functions $G_r(t)$. However, the arrangement may be such that a time-series filter, such as a Kalman filter or a particle filter, which is used in predicting the ever-changing vehicle position from the output of an acceleration sensor or GPS data, for instance, may be used to obtain the predicted incidence rates $S_{Rp}$ of road surface conditions R.

Also, in the first embodiment, the predicted incidence rates $S_{Rp}$ of road surface conditions $R(t_p)$ at time $t_p$ are obtained from the time-dependent changes in the incidence rates $S_{Rk}$ of estimated road surface conditions R at times $t_{-10}$ to $t_{-1}$, which are estimated by the road surface condition estimating means 13, provided on each of a plurality of vehicles $W_i$. However, a decision value estimating means for estimating road surface estimation decision values $K_k$ used in estimating road surface conditions R, in the place of the road surface condition estimating means 13, may be provided in each of the vehicles $W_i$, and the predicted values $K_p$ of the road surface estimation decision values at time $t_p$ may be found from the road surface estimation decision values $K_k$ at times $t_{-10}$ to $t_{-1}$. And the road surface condition $R(t_p)$ at time $t_p$ may be predicted from the predicted values $K_p$.

Also, in the first embodiment, the statistical data of the estimated road surface conditions is classified into four conditions of DRY road surface, WET road surface, SNOW road surface, and ICE road surface. However, the SNOW road surface and the ICE road surface, which are both slippery, may be combined as a dangerous road surface, and the incidence probability of the dangerous road surface may be determined.

Second Embodiment

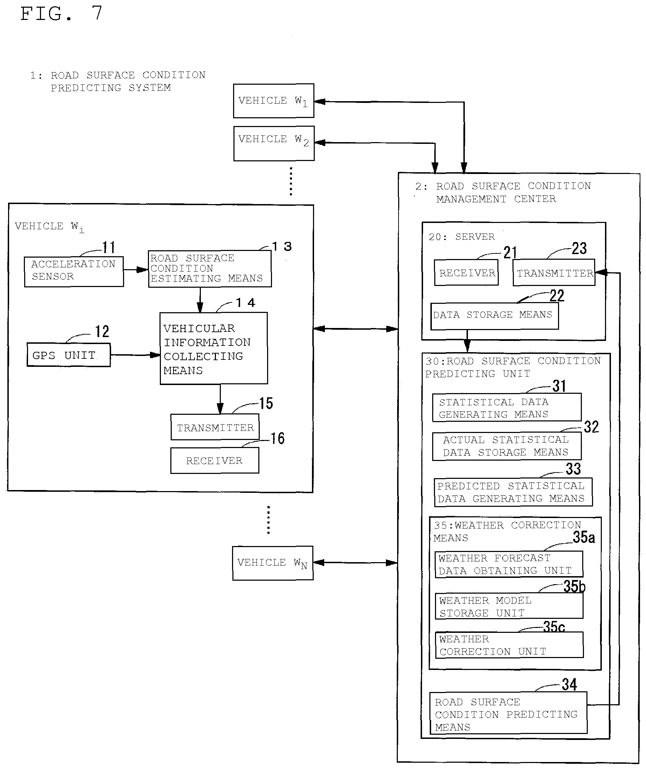

In the foregoing first embodiment of the invention, no consideration is given to changes in the weather at the location where the vehicles are traveling. However, as shown in FIG. 7, a weather correction means 35 may be provided between the predicted statistical data generating means 33 and the road surface condition predicting means 34 of the road surface condition predicting unit 30 as shown in FIG. 1 of the first embodiment, and the road surface condition $R(t_p)$ at time $t_p$ predicted by the road surface condition predicting means 34 may be corrected based on the weather forecast data at time $t_p$ for the location $L_r$ within the predetermined range. This will further improve the prediction accuracy of a road surface condition.

The weather correction means 35 includes a weather forecast data obtaining unit 35a, a weather model storage unit 35b, and a weather correction unit 35c.

The weather forecast data obtaining unit 35a obtains the forecast data of weather and temperature in the time slot including the time $t_p$ by connecting to the not-shown Internet.

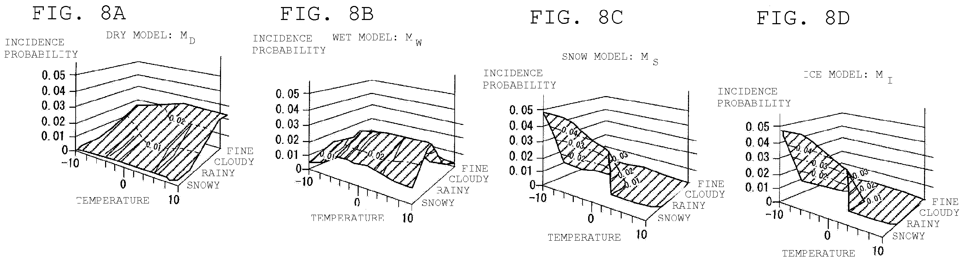

The weather model storage unit 35b stores four weather models $M_R$ (R: DRY, WET, SNOW, ICE) . FIGS. 8A to 8D show examples of weather models $M_R$. The axes of the diagrams represent the temperature (°C) and weather (1: fine, 2: cloudy, 3: rainy, 4: snowy) . And the probability of the road surface condition being R when the weather is m (m = 1 to 4) is $p_{TmR}$. The probability $p_{TmR}$, which is a function of two variables (T and m), can be represented by curved surfaces.

It is to be noted that the sum of the probabilities $p_{TmR}$: $\Sigma p = p_{TmD} + p_{TmW} + p_{TmS} + p_{TmI}$ is not 1. For actual use, therefore, normalized probabilities are used. Hereinbelow, $p_{TmR} = p_{TmD}/\Sigma_p$ is referred to as the incidence frequency.

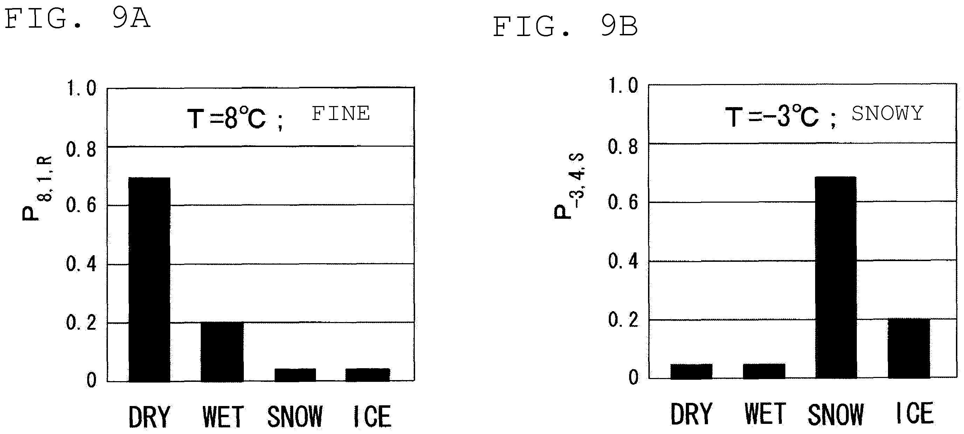

For example, as shown in FIG. 9A, when the temperature is 8°C and the weather is fine, the incidence frequency $P_{8,1,D}$ of the road surface condition being DRY is 0.7, the incidence frequency $P_{8,1,W}$ of the road surface condition being WET is 0.2, and the incidence frequency $P_{8,1,S}$ of the road surface condition being SNOW and the incidence frequency $P_{8,1,I}$ of the road surface condition being ICE are both 0.05. Also, as shown in FIG. 9B, when the temperature is -3°C and the weather is snowy (m = 4), the incidence frequency $P_{-3,4,D}$ of the road surface condition being DRY and the incidence frequency $P_{-3,4,W}$ of the road surface condition being WET are both 0.05, the incidence frequency $P_{-3,4,S}$ of the road surface condition being SNOW is 0.7, and the incidence frequency $P_{-3,4,I}$ of the road surface condition being ICE is 0.2.

The weather models $M_R$ are generated using past weather conditions and road surface condition data at the predetermined location $L_r$. It is to be noted that the weather models $M_R$ may be generated for different seasons or different months. In the present example, four different weathers and the temperature of -10°C to 10°C are used. However, the weathers may be more finely classified, and different ranges and graduation intervals of temperature may be used.

The weather correction unit 35c takes out the data of incidence frequencies $p_{TmD}$, $p_{TmW}$, $p_{TmS}$, $p_{TmI}$ when the weather is m and the temperature is T from the weather models stored in the weather model storage unit 35b based on the forecast data of the weather m and temperature T in the time slot including the time $t_p$ obtained by the weather forecast data obtaining unit 35a and corrects the predicted incidence rates $S_{Rp}$ of road surface conditions R calculated by the predicted statistical data generating means 33, using these incidence frequencies $p_{TmD}$, $p_{TmW}$, $p_{TmS}$, $p_{TmI}$.

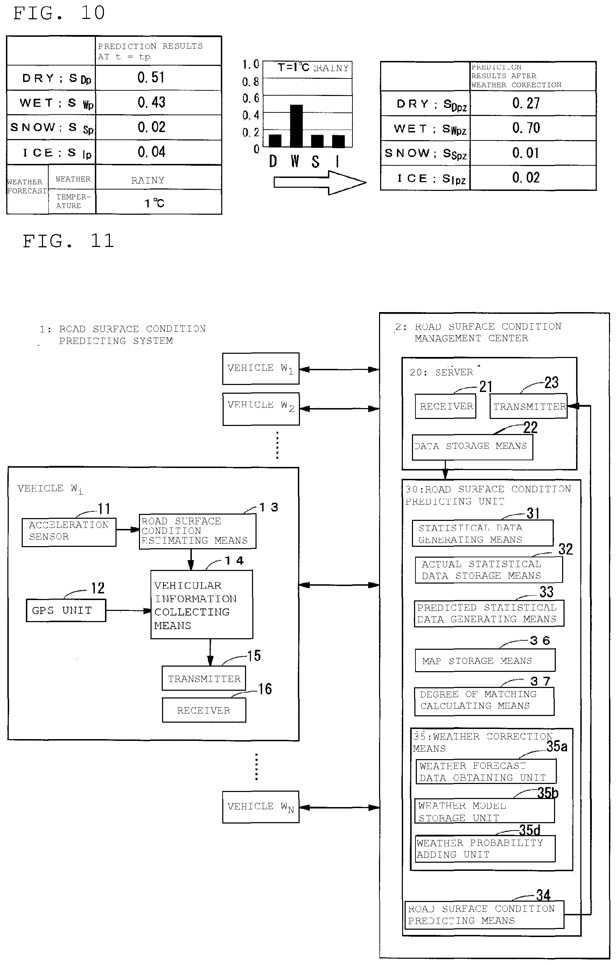

More specifically, as shown in FIG. 10, the incidence frequencies $p_{TmR}$ of the weather models are added up to the predicted incidence rates $S_{Rp}$ of road surface conditions R at time $t_p$ predicted in the foregoing first embodiment, and the values thus obtained are used as the predicted incidence rates $S_{Rpz}$ of road surface conditions R after the correction. And the road surface condition R at time $t_p$ is predicted by comparing the $S_{Rpz}$ of road surface conditions R. Here, since the weather is rainy (m = 3) and the temperature T is 1°C, the incidence frequency of a DRY road surface is $p_{TmD} = 0.17$, the incidence frequency of a WET road surface is $p_{TmW} = 0.51$, the incidence frequency of a SNOW road surface is $p_{TmS} = 0.16$, and the incidence frequency of an ICE road surface is $p_{TmI} = 0.16$.

After the correction, the predicted incidence rate of a DRY road surface is calculated by $S_{Dpz} = P_{TmD} \cdot S_{Dp}$, and the predicted incidence rate of a WET road surface is calculated by $S_{Wpz} = P_{TmW} \cdot S_{wp}$. Also, the predicted incidence rate of a SNOW road surface is calculated by $S_{Spz} = P_{TmS} \cdot S_{Sp}$, and the predicted incidence rate of an ICE road surface is calculated by $S_{Ipz} = P_{TmI} \cdot S_{Ip}$.

It is to be noted that FIG. 10 shows the values of predicted incidence rates $S_{Rpz}$ of road surface conditions R after the correction as ones normalized such that the sum ($\Sigma_R S_{Rpz}$) is 1.

The road surface condition predicting means 34 predicts the road surface condition indicating the highest predicted value after correction (predicted incidence rate $S_{Rpz}$) to be the road surface condition $R_z(t_p)$ at the location $L_k$ within the predetermined range at time $t_p$.

By repeating the prediction of road surface conditions using the prediction results of road surface conditions like this, it is possible to predict the road surface condition $R_z(t_q)$ at a further future time tq ($t_q > t_p$) with weather taken into consideration.

Third Embodiment

In the foregoing second embodiment, the road surface condition $R_z(t_q)$ with weather taken into consideration is predicted by correcting the predicted incidence rates $S_{Rp}$ of the road surface conditions R using the incidence frequencies $P_{TmD}$, $P_{TmW}$, $P_{TmS}$, $P_{TmI}$ when the weather is m and the temperature T. However, as shown in FIG. 11, a map storage means 36 for storing reference maps $M_{R0}$ for the respective road surface conditions (R: DRY road surface, WET road surface, SNOW road surface, ICE road surface) and a degree of matching calculating means 37 for calculating the degrees of matching J of the predicted incidence rates $S_{Rp}$ of the road surface conditions R generated by the predicted statistical data generating means 33 using the reference maps $M_{R0}$ for the respective road surface conditions may be provided between the predicted statistical data generating means 33 and the weather correction means 35 of the road surface condition predicting unit 30 as shown in FIG. 7 of the second embodiment. And in the place of the weather correction unit 35c, a weather probability adding unit 35d for predicting the road surface condition $R_z(t_p)$ from the calculated degrees of matching J and the incidence frequencies $P_{TmD}$, $P_{TmW}$, $P_{TmS}$, $P_{TmI}$ when the weather is m and the temperature T may be provided. In this manner, the road surface condition $R_z(t_p)$ with weather taken into consideration can be predicted with still more improved accuracy of prediction.

Note that the reference maps $M_{R0}$ for the respective road surface conditions and the degrees of matching J will be described in detail below.

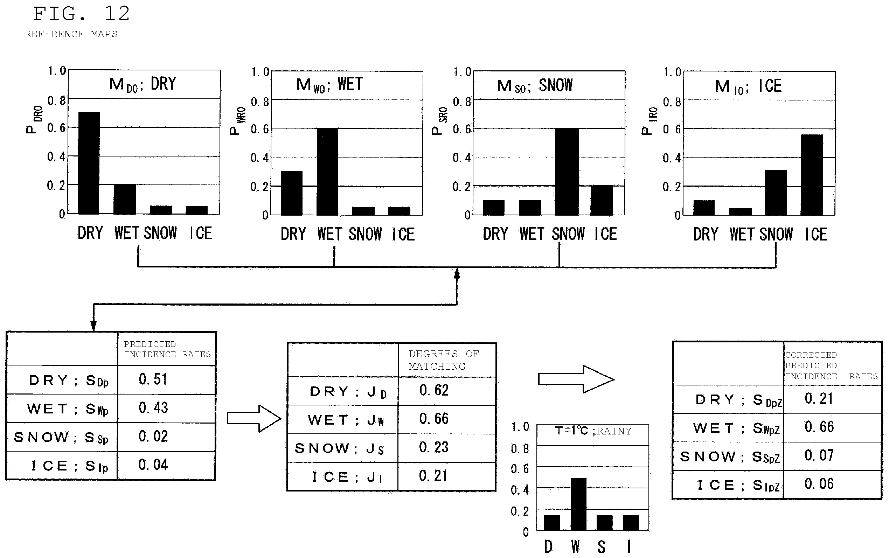

As shown in FIG. 12, the reference map $M_{D0}$ for DRY road surface is statistical data of estimated road surface conditions obtained by a test vehicle fitted with standard tires which has been operated to travel multiple times at constant speed on DRY road surfaces. The reference map $M_{D0}$ for DRY road surface, created with the test vehicle traveling on DRY road surfaces, shows a mapping of the rate $P_{DD0}$ of estimating the road surface to be a DRY road surface, the rate $P_{DW0}$ of estimating the road surface to be a WET road surface, the rate $P_{DS0}$ of estimating the road surface to be a SNOW road surface, the rate $P_{DI0}$ of estimating the road surface to be an ICE road surface.

Also, the reference map $M_{W0}$ for WET road surface, created with the test vehicle traveling on WET road surfaces, shows a mapping of the rate $P_{WD0}$ of estimating the road surface to be a DRY road surface, the rate $P_{WW0}$ of estimating the road surface to be a WET road surface, the rate $P_{WS0}$ of estimating the road surface to be a SNOW road surface, the rate $P_{WI0}$ of estimating the road surface to be an ICE road surface. And reference map $M_{S0}$ for SNOW road surface, created with the test vehicle traveling on SNOW road surfaces, shows a mapping of the rate $P_{SD0}$ of estimating the road surface to be a DRY road surface, the rate $P_{SW0}$ of estimating the road surface to be a WET road surface, the rate $P_{SS0}$ of estimating the road surface to be a SNOW road surface, the rate $P_{SI0}$ of estimating the road surface to be an ICE road surface.

Also, the reference map $M_{I0}$ for ICE road surface, created with the test vehicle traveling on ICE road surfaces, shows a mapping of the rate $P_{ID0}$ of estimating the road surface to be a DRY road surface, the rate $P_{IW0}$ of estimating the road surface to be a WET road surface, the rate $P_{IS0}$ of estimating the road surface to be a SNOW road surface, the rate $P_{II0}$ of estimating the road surface to be an ICE road surface.

As a matter of course, $P_{DD0}$ is the highest in the reference map $M_{D0}$; $P_{WW0}$ is the highest in the reference map $M_{W0}$; $P_{SS0}$ is the highest in the reference map $M_{S0}$; and $P_{II0}$ is the highest in the reference map $M_{I0}$.

Hereinafter the rates $P_{RR'0}$ will be referred to as reference incidence rates. And R and R' herein refer to any one of D, W, S, and I.

The degree of matching calculating means 37, as shown in FIG. 12, calculates respectively the degrees of matching $J_R$ (R: DRY, WET, SNOW, ICE) of predicted incidence rates $S_{Rp}$, which are the predicted statistical data $M_{pC}$ generated by the predicted statistical data generating means 33, using the reference maps $M_{D0}$ to $M_{I0}$ for the respective road surfaces and sends these four calculated degrees of matching $J_R$ to the weather probability adding unit 35d of the weather correction means 35.

The DRY degree of matching $J_D$ is calculated by the following formula (1) using the predicted incidence rates $S_{Rp}$ in the predicted statistical data $M_{pC}$ and the above-described reference incidence rates $P_{DD0}$, $P_{DW0}$, $P_{DS0}$, $P_{DI0}$, in the reference maps $M_{D0}$:

$$J_D = \text{esp} \{-(|S_{Dp} - P_{DD0}|^2 + |S_{Wp} - P_{DW0}|^2 + |S_{Sp} - P_{DS0}|^2 + |S_{Ip} - P_{DI0}|^2)\} \ \ldots\ldots \quad (1)$$

In a similar manner, the WET degree of matching $J_W$, the SNOW degree of matching $J_S$, and the ICE degree of matching $J_I$ are respectively calculated by the following formulas (2) to (4):

$$J_W = \text{esp} \{-(|S_{Dp} - P_{WD0}|^2 + |S_{Wp} - P_{WW0}|^2 + |S_{Sp} - P_{WS0}|^2 + |S_{Ip} - P_{WI0}|^2)\} \ \ldots\ldots \quad (2)$$

$$J_S = \text{esp} \{-(|S_{Dp} - P_{SD0}|^2 + |S_{Wp} - P_{SW0}|^2 + |S_{Sp} - P_{SS0}|^2 + |S_{Ip} - P_{SI0}|^2)\} \ \ldots\ldots \quad (3)$$

$$J_I = \text{esp} \{-(|S_{Dp} - P_{ID0}|^2 + |S_{Wp} - P_{IW0}|^2 + |S_{Sp} - P_{IS0}|^2 + |S_{Ip} - P_{II0}|^2)\} \ \ldots\ldots \quad (4)$$

The weather probability adding unit 35d calculates the incidence rates $S_{RpZ}$ of road surface conditions when the weather is m and the temperature T, using the product of the incidence frequency $P_{TmR}$ when the weather is m and the temperature T and the degree of matching $J_R$ calculated by the degree of matching calculating means 37.

When the weather is m and the temperature T, the predicted incidence rate of DRY road surface is calculated by $S_{DpZ} = P_{TmD} \cdot J_D$. The predicted incidence rate of WET road surface is calculated by $S_{WpZ} = P_{TmW} \cdot J_W$. Also, the predicted incidence rate of SNOW road surface is calculated by $S_{SpZ} = P_{TmS} \cdot J_S$. And the predicted incidence rate of ICE road surface is calculated by $S_{IpZ} = P_{TmI} \cdot J_I$.

It is to be noted that FIG. 12 shows the values of predicted incidence rates $S_{RpZ}$ of road surface conditions R when the weather is m and the temperature T, which are normalized such that the sum ($\Sigma_R S_{RpZ}$ is 1.

The road surface condition predicting means 34 predicts the road surface condition indicating the highest predicted value (predicted incidence rate $S_{RpZ}$) when the weather is m and the temperature T to be the road surface condition $R_Z(t_p)$ at the location $L_k$ within the predetermined range at time $t_p$.

By repeating the prediction of road surface conditions using the prediction results of road surface conditions like this, it is possible to predict the road surface condition $R_Z(t_q)$ at a further future time $t_q$ ($t_q > t_p$) with weather taken into consideration.

In the foregoing third embodiment, the predicted incidence rates $S_{DpZ}$ of road surface conditions R when the weather is m and the temperature T are predicted by adding the incidence frequencies $P_{TmR}$ of weather models to the degrees of matching $J_R$ obtained from the predicted incidence rates $S_{Rp}$ in the predicted statistical data $M_{pC}$ and the reference maps $M_{R0}$ for the respective road surface conditions. However, road surface weather models $M_{RmT}$ mapping the incidence rates $P_{RmT}$ of the respective road surface conditions R when the weather is m (m = 1 to 4) and the temperature T may be generated, and the predicted incidence rates may be predicted from the predicted incidence rates $S_{Rp}$ of road surface conditions R generated by the data generating means 33 and the road surface weather models $M_{RmT}$.

Also, in the foregoing first to third embodiments, the road surface condition $R(t_p)$ at time $t_p$ is predicted using actual statistical data $M_k$ of incidence rates $S_{Rk}$ of road surface conditions estimated by a plurality of vehicles $W_i$ calculated for the respective road surface conditions R. However, when there is only one vehicle $W_x$ that has passed the predetermined location $L_r$ at time $t_k$, actual statistical data $M_k$ at time $t_k$ cannot be generated.

In such a case, the reference maps $M_{R0}$ for the respective road surface conditions as described in the foregoing third embodiment are used as actual statistical data $M_k$.

More specifically, when the estimated road surface condition estimated by the vehicle $W_x$ is a DRY road surface, the reference map $M_{D0}$ for DRY road surface is used as actual statistical data $M_k$ at time $t_k$.

The reference maps $M_{D0}$, as already mentioned, are mappings of the rate $P_{DD0}$ of the vehicle traveling on the DRY road surface estimating the road surface to be a DRY road surface, the rate $P_{DW0}$ of the vehicle estimating the road surface to be a WET road surface, the rate $P_{DS0}$ of the vehicle estimating the road surface to be a SNOW road surface, and the rate $P_{DI0}$ of the vehicle estimating the road surface to be an ICE road surface. Therefore, use of the reference maps $M_{D0}$ in substitution for the actual statistical data $M_k$ may get the actual statistical data $M_k$ closer to the actuality than when the incidence rate of DRY road surface is assumed to be 1.0. Hence, a sufficient accuracy can be ensured for the prediction of a road surface condition.

This can also be applied to cases where the number of vehicles having passed the predetermined location $L_r$ is limited (e.g., less than 10 vehicles). For example, when there are only three vehicles having passed the location with the vehicles $W_x$ and Wy estimating the road surface condition to be a DRY road surface and the vehicle $W_z$ estimating it to be a WET road surface, the actual statistical data $M_k$ may be generated from the reference map $M_{D0}$ and the reference map $M_{W0}$. In doing so, it is preferable that weighting is done according to the number of vehicles; for example, the reference map $M_{D0}$ is weighted by 2 (weighting coefficient $W_D = 2/3$), and the reference map $M_{W0}$ by 1 (weighting coefficient $W_W = 1/3$).

In this manner, by generating reference maps $M_{R0}$ for the respective road surface conditions in advance, future road surface conditions can be predicted with accuracy even when the number of vehicles having passed the predetermined location $L_r$ is limited.

Also, in the foregoing first to third embodiments, a plurality of vehicles $W_i$ are used for the prediction of road surface conditions. However, by use of the reference maps $M_{R0}$ for the respective road surface conditions, it is also possible to predict road surface conditions $R_r(t_p)$ at a plurality of predetermined locations $L_r$ by operating a single vehicle $W_p$ traveling the route including the plurality of predetermined locations a plurality of times.

That is, estimated road surface conditions at the predetermined location $L_r$ are sent from the vehicle $W_p$ to the server20 at times $t_a$, $t_b$, $t_c$, ......, and estimated road surface conditions at the predetermined location $L_{r'}$ at times $t_{a+h}$, $t_{b+h}$, $t_{c+h}$, ........ For example, the estimated road surface conditions R at a predetermined location $L_r$ change as time passes like at times $t_a$, $t_b$, $t_c$, ...... (a < b < c < 0). Accordingly, the estimated road surface conditions R estimated by the vehicle $W_p$ at time $t_m$ (m > 0), substituted with the reference maps $M_{R0}$ of road surfaces R, may be used as actual statistical data $M_k$. In this way, the road surface conditions at time $t_m$ can be predicted as in the foregoing first to third embodiments. It is to be noted that the reference maps $M_{R0}$ may be changed for each of vehicles $W_p$.

Fourth Embodiment

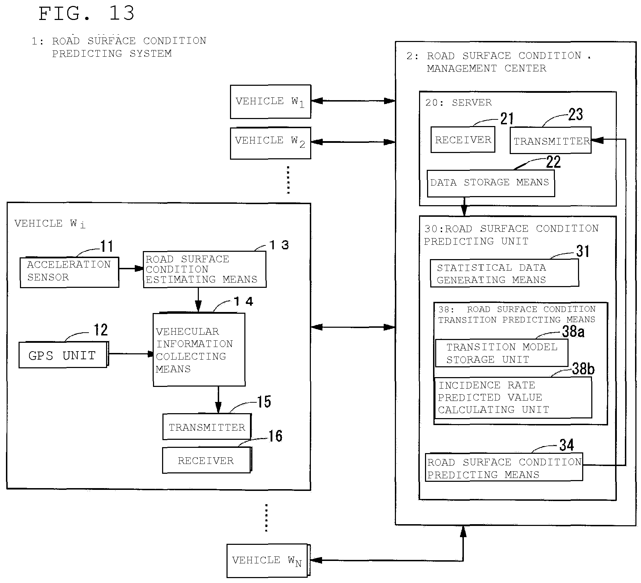

In the foregoing first embodiment, the predicted incidence rates $S_{Rp}$ of road surface conditions $R(t_p)$ at a future time $t_p$ ($p > 0$) are predicted from the time-dependent changes in road surface conditions R at a plurality of times $t_k$ ($k = -n$ to $-1$) estimated at the location within a predetermined range. However, as shown in FIG. 13, by providing a road surface condition transition predicting means 38, the predicted incidence rates $S_{Rp}$ of road surface conditions $R(t_p)$ at a future time $t_p$ may be predicted from the data at time $t_{-1}$ out of the past data generated by the statistical data generating means 31.

It is to be noted that, in the present example, the statistical data generating means 31 generates maps tallying up the incidence rates of estimated road surface conditions R estimated at the location $L_r$ within the predetermined range at time t, which is time t (r)$_{-1}$ immediately before the time $t_p$ at which a prediction is made, for the respective estimated road surface conditions R, from the data stored in the data storage means 22 of the server 20.

The road surface condition transition predicting means 38 includes a transition model storage unit 38a and an incidence rate predicted value calculating unit 38b.

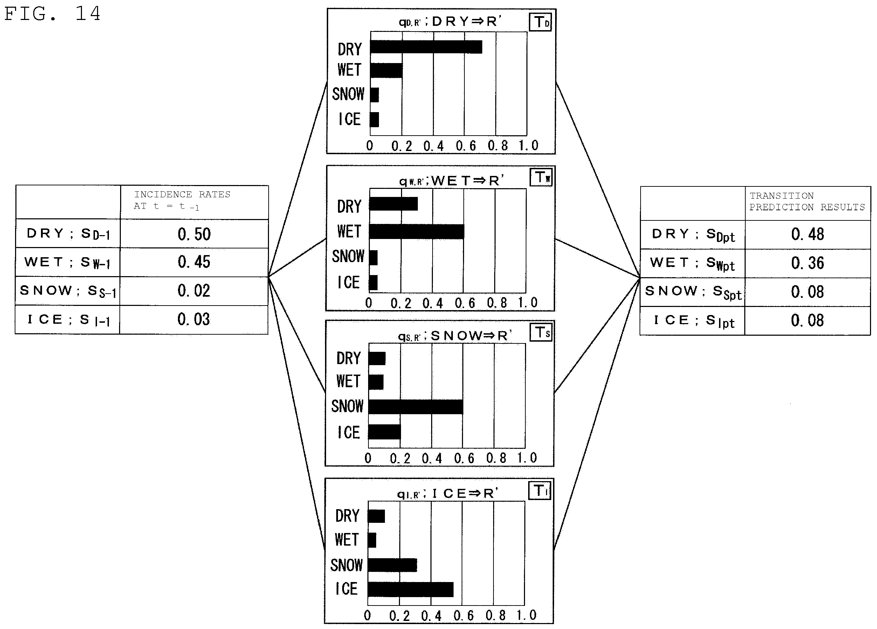

The transition model storage unit 38a, as shown in FIG. 14, stores four transition models $T_r$ (R: DRY, WET, SNOW, ICE).

The transition models $T_r$, which are generated for the respective road surface conditions R, represent the probabilities of the road surface conditions $R_k$ at time $t_k$ becoming the road surface conditions R' at time $t_{k+1}$ (hereinafter referred to as transition probabilities).

For example, with the DRY transition model $T_D$ in the upper middle of FIG. 14, the probability $q_{D,D}$ of the DRY road surface condition continuing is 0.7; the probability $q_{D,W}$ of the DRY road surface becoming a WET road surface is 0.2; the probability $q_{D,S}$ of the DRY road surface becoming a SNOW road surface is 0.05; and the probability $q_{D,I}$ of the DRY road surface becoming an ICE road surface is 0.05. These transition probabilities $q_{R,R}$ are generated using the data of the past road surface conditions R.

The incidence rate predicted value calculating unit 38b calculates incidence rate predicted values $S_{Rp}$ by correcting the incidence rate predicted value $S_{R-1}$ for the estimated road surface conditions R at time $t_{-1}$ using the above-mentioned transition probabilities $q_{R,R'}$. The incidence rate predicted values $S_{Rpt}$ are calculated for the respective road surface conditions R.

The incidence rate predicted values $S_{Dpt}$, $S_{Wpt}$, $S_{Spt}$, $S_{Ipt}$ for the respective road surface conditions R are respectively calculated by the following formulas (5) to (8):

$$S_{Dpt} = S_{D-1} \cdot q_{D,D} + S_{W-1} \cdot q_{W,D} + S_{S-1} \cdot q_{S,D} + S_{I-1} \cdot q_{I,D} \quad \cdots\cdots \quad (5)$$

$$S_{Wpt} = S_{D-1} \cdot q_{D,W} + S_{W-1} \cdot q_{W,W} + S_{S-1} \cdot q_{S,W} + S_{I-1} \cdot q_{I,W} \quad \cdots\cdots \quad (6)$$

$$S_{Spt} = S_{D-1} \cdot q_{D,S} + S_{W-1} \cdot q_{W,S} + S_{S-1} \cdot q_{S,S} + S_{I-1} \cdot q_{I,S} \quad \cdots\cdots \quad (7)$$

$$S_{Ipt} = S_{D-1} \cdot q_{D,I} + S_{W-1} \cdot q_{W,I} + S_{S-1} \cdot q_{S,I} + S_{I-1} \cdot q_{I,I} \quad \cdots\cdots \quad (8)$$

The road surface condition predicting means 34 predicts the road surface condition indicating the highest value of these incidence rate predicted values $S_{Dpt}$, $S_{Wpt}$, $S_{Spt}$, $S_{Ipt}$ to be the road surface condition $R(t_p)$ at the location $L_k$ within the predetermined range at time $t_p$.

In this manner, the predicted incidence rates $S_{Rpt}$ of the road surface conditions R at a future time $t_p$ ($p > 0$) are predicted from the transition probabilities $q_{R,R'}$ of road surface conditions determined in advance and the incidence rates $S_{R-1}$ of the estimated road surface conditions R at time $t_{-1}$ as the past data. Thus, the road surface condition $R_t(t_p)$ at a future time $t_p$ can be predicted by a simple scheme.

In the foregoing fourth embodiment, the incidence rate predicted values $S_{Dpt}$, $S_{Wpt}$, $S_{Spt}$, $S_{Ipt}$ are obtained using the transition probabilities $q_{R,R'}$ determined in advance from the past data. However, as the transition probabilities, the probability of the same road surface condition R continuing may be set as $q'_{R,R} = 0.8$, and the probability of a road surface condition R changing into a road surface condition R' may be set as $q'_{R,R'} = (0.2) / 3$, for instance. It is to be noted that the denominator 3 is the number of road surface conditions R' other than the road surface condition R.

In this case, the incidence rate predicted values $S'_{Dpt}$, $S'_{Wpt}$, $S'_{Spt}$, $S'_{Ipt}$ for the respective road surface conditions R are respectively calculated by the following formulas (5') to (8'):

$$S'_{Dpt} = S_{D-1} \cdot 0.8 + S_{W-1} \cdot 0.2/3 + S_{S-1} \cdot 0.2/3 + S_{I-1} \cdot 0.2/3 \ldots (5')$$

$$S'_{Wpt} = S_{D-1} \cdot 0.2/3 + S_{W-1} \cdot 0.8 + S_{S-1} \cdot 0.2/3 + S_{I-1} \cdot 0.2/3 \ldots (6')$$

$$S'_{Spt} = S_{D-1} \cdot 0.2/3 + S_{W-1} \cdot 0.2/3 + S_{S-1} \cdot 0.8 + S_{I-1} \cdot 0.2/3 \ldots (7')$$

$$S'_{Ipt} = S_{D-1} \cdot 0.2/3 + S_{W-1} \cdot 0.2/3 + S_{S-1} \cdot 0.2/3 + S_{I-1} \cdot 0.8 \ldots (8')$$

In this manner, the method for predicting a road surface condition at time $t_p$ using the pre-set transition probabilities $q'_{R,R'}$ of estimated road surface conditions or the predetermined transition probabilities $q_{R,R'}$ of estimated road surface conditions may be applied to the prediction in the initial phase when the number of past data is limited. This enables a prediction under the circumstances where there is no adequate amount of past data.

Fifth Embodiment

In the foregoing fourth embodiment, the road surface condition $R(t_p)$ at a future time $t_p$ is predicted using the incidence rate predicted values $S_{Rpt}$ derived from the past data ($t = t_{-1}$) and the predetermined transition probability of road surface conditions. However, the predicted incidence rates $V_{Rp}$ of road surface conditions $R$ at a future time $t_p$ may be obtained using the preceding predicted incidence rates $V_{R-1}$, which are the predicted incidence rates at time $t_{-1}$, the transition probability $q_{R,R'}$ described in the fourth embodiment, and the predicted incidence rates $S_{Rp}$ determined in the first embodiment. And using these incidence rate predicted values $V_{Dp}$, $V_{Wp}$, $V_{Sp}$, $V_{Ip}$, the road surface condition $R(t_p)$ at time $t_p$ may be predicted. In this manner, it is possible to predict a future road surface condition with even greater accuracy.

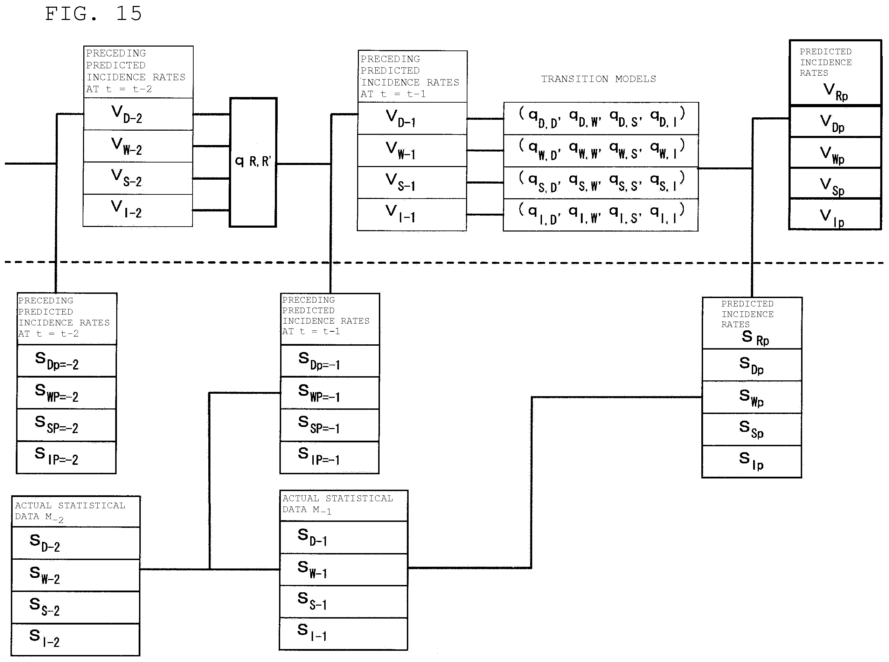

Now a description is given of the procedure for obtaining the predicted incidence rates $V_{Rp}$ with reference to FIG. 15.

Calculation of the predicted incidence rates $V_{Rp}$ is done when preceding predicted incidence rates up to time $t_{-1}$, namely, $V_{R-n}$, ......, $V_{R-2}$, $V_{R-1}$ (calculated values) and actual statistical data $M_{-n}$, ......, $M_{-2}$, $M_{-1}$ are already known. Note that the initial preceding predicted incidence rate $V_{R-1}$ is the setting value.

Firstly, the products $P_{R,R'P}$ of the preceding predicted incidence rates $V_{R-1}$ at time $t_{-1}$ and the transition probabilities $q_{R,R'}$ are obtained (procedure 1) .

Next, the predicted incidence rates $S_{Rp}$ at time $t_p$ are obtained from the actual statistical data $M_{-n}$, ......, $M_{-3}$, $M_{-2}$, $M_{-1}$ at times preceding time $t_p$, namely, $t_{-n}$, ....... , $t_{-3}$, $t_{-2}$, $t_{-1}$ (procedure 2). Note that the description of the method for predicting the predicted incidence rates $S_{Rk}$ is omitted since it is the same as in the first embodiment.

Then the products $V_{Rp}$ of the products $P_{R,R'P}$ obtained in the procedure 1 and the predicted incidence rates $S_{Rp}$ obtained in the procedure 2 are calculated, and the products $V_{Rp}$ are used as the predicted incidence rates of road surface conditions $R$ at a future time $t_p$ (procedure 3).

Finally, these predicted incidence rates $V_{Dp}$, $V_{Wp}$, $V_{Sp}$, $V_{Ip}$ are compared with each other, and the road surface condition showing the highest value is predicted to be the road surface condition $R(t_p)$ at the location $L_k$ within the predetermined range at time $t_p$ (procedure 4). It is to be noted that procedure 1 and procedure 2 may be reversed.

It is to be appreciated that when the actual statistical data Mp at time $t_p$ are actually measured, it goes without saying that the time $t_p$ becomes "preceding time $t_{-1}$", the time $t_{-1}$ becomes time $t_{-2}$, and the initial time $t_{-n}$ becomes time $t_{-n-1}$ (the past time increasing by 1).

In FIG. 15, the predicted incidence rates at time $t_{-k}$, which are denoted by $S_{Rp=-k}$, are distinguished from incidence rates $S_{R-k}$, which are actually measured values at time $t_{-k}$. The predicted incidence rates $S_{Rp=-k}$ are substituted with the incidence rates $S_{R-k}$ at the point when the actual statistical data $M_k$ at time $t_k$ are actually measured.

By repeating this operation, it is possible to predict the road surface condition $R(t_k)$ at a further future time $t_q$ ($t_q > t_p$).

In the foregoing fifth embodiment, the products of the products $P_{R,R'P}$ and the predicted incidence rates $S_{Rp}$ are used as the predicted incidence rates $V_{Rp}$ of the road surface conditions $R$ at a future time $t_p$. However, the degrees of matching $J_{Rp}$ between the reference incidence rates $P_{R,R'}$ in the reference maps $M_{R0}$, which are the models corresponding to the respective road surface conditions, and the predicted incidence rates $S_{Rp}$ may be used in the place of the predicted incidence rates $S_{R}p$.

The degrees of matching $J_{Rp}$ are calculated by the following formula (9) in the same manner as in the third embodiment:

$$J_{Rp} = \exp \{-(|S_{Dp} - P_{RD0}|^2 + |S_{\overline{W}p} - P_{R\overline{W}0}|^2$$

$$+ |S_{Sp} - P_{RS0}|^2 + |S_{Ip} - P_{RI0}|^2 )\} \quad \ldots\ldots \quad (9)$$

Also, in the foregoing fifth embodiment, the predicted incidence rates used are the predicted incidence rates $S_{Rp}$ obtained in the first embodiment. However, the predicted incidence rates $V_{Rp}$ of the road surface conditions R may be obtained using the predicted incidence rates $S_{Rpz}$ corrected by the weather model obtained in the second embodiment or the predicted incidence rates $S_{RpZ}$ corrected using the maps $M_{R0}$ of the respective road surface conditions and the weather model. In this manner, the prediction with weather changes taken into consideration can be made such that it is possible to predict future road surface conditions with even greater accuracy.

It is to be noted that in another method of prediction with weather changes taken into consideration, transition models $T_{RT}$ for the weather or the weather and temperature, which are the weather forecast data, may be generated, and the predicted incidence rates $V_{Rp}$ of road surface conditions at a future time $t_p$ may be obtained using the transition models $T_{RT}$, preceding predicted incidence rates $V_{R-1}$, and predicted incidence rates $S_{Rp}$.

In the foregoing fourth embodiment, the predicted incidence rates $S_{Rpt}$ of road surface conditions $R(t_p)$ at a future time $t_p$ are predicted from the transition models $T_R$ determined in advance and the incidence rates $S_{R-1}$ at time $t_{-1}$. However, by changing the transition models $T_R$ according to the transitional state of actual statistical data $M_k$, the accuracy of predicting the road surface condition $R(t_p)$ can be further improved.

Hereinbelow, a description is given of a method for changing the transition models $T_R$.

Firstly, it is checked to find how the incidence rates $S_{R-1}$ at time $t_{-1}$, which are actual measurement data, have changed from the incidence rates $S_{R-2}$ at time $t_{-2}$, which is the time immediately before time $t_{-1}$.

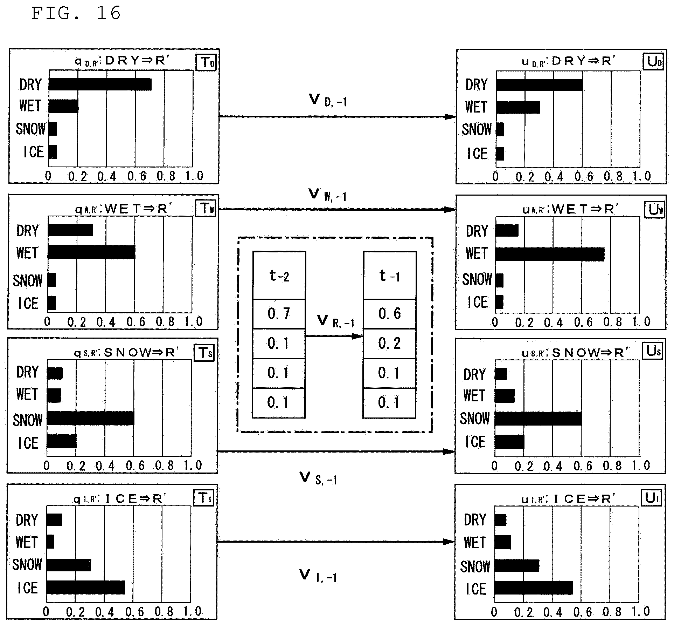

For example, as shown in FIG. 16, let us suppose that when the time has passed from $t_{-2}$ to $t_{-1}$, the incidence rate of a DRY road surface has reduced from $S_{D-2} = 0.7$ to $S_{D-1} = 0.6$, and the incidence rate of a WET road surface has increased from $S_{W-2} = 0.1$ to $S_{W-1} = 0.2$ (with no change in SNOW and ICE).

Here, if the change rate of incidence rate of the road surface condition R in the actual measurement data is $V_{R-k} = S_{R-k}/S_{R-k-1}$, then $V_{D-1} = 0.86$, $V_{W-1} = 2.0$, and $V_{S-1} = V_{D-k} = 1.00$.

Thus, the probability of a DRY road surface condition continuing in the transition model $T_D$ is changed from $q_{D,D} = 0.7$ to $u_{D,D} = v_{D,D} \cdot q_{D,D} = 0.6$, and the probability of a DRY road surface changing into a WET road surface is changed from $q_{D,W} = 0.2$ to $u_{D,W} = v_{W-1} \cdot q_{D,W} = 0.4$. Then $u_{D,R}$ is normalized such that the sum of the transition probabilities after the change is 1.

The transition models $T_R$ are changed by repeating the above operation for the other transition models $T_W$, $T_S$, and $T_I$.

Hereinfter, the transition models after the change will be referred to as $U_R$, and the probability of the road surface condition transiting from R to R' as $u_{R,R'}$.

Next, the incidence rate predicted values $S_{RpT}$ are calculated by correcting the incidence rates $S_{R-1}$ of the estimated road surface conditions R at time $t_{-1}$ by use of the above-mentioned $u_{R,R'}$.

The calculation formula for the incidence rate predicted value $S_{RpT}$ is as shown in the equation (10) below:

$$S_{RpT} = S_{D-1} \cdot u_{D,R} + S_{W-1} \cdot u_{\overline{W},R} + S_{S-1} \cdot u_{S,R} + S_{I-1} \cdot u_{I,R} \quad \ldots\ldots \quad (10)$$

The incidence rate predicted value $S_{RpT}$ is calculated for each of the road surface conditions R.

The road surface condition predicting means 34 predicts the road surface condition indicating the highest value of these incidence rate predicted values $S_{DpT}$, $S_{WpT}$, $S_{SpT}$, $S_{IpT}$ to be the road surface condition $R_T(t_p)$ at the location $L_k$ within the predetermined range at time $t_p$.

In this manner, the transition probabilities $u_{R,R'}$ of road surface conditions are changed according to the transitional states of past data (actual measurement data $M_k$). Accordingly, the road surface condition $R_T(t_p)$ at a future time $t_p$ can be predicted with even greater accuracy.

In the foregoing sixth embodiment, the transition models $T_R$ are changed using the change rates $V_R$ from the incidence rates $S_{R-2}$ at time $t_{-2}$ to the incidence rates $S_{R-1}$ at time $t_{-1}$. However, the transition models $T_R$ may be changed using the change rates $v_{R-m}, \ldots$, $v_{R-2}$, $V_{R-1}$ at a series of times $t_{-m}, \ldots$, $t_{-3}$, $t_{-2}$ preceding time $t_{-1}$. As mentioned above, the change rates of incidence rates of road surface conditions R are calculated by $V_{R-k} = S_{R-k}/S_{R-k-1}$.

More specifically, the change rates $V_{R-m}, \ldots$, $v_{R-2}$, $V_{R-1}$ of incidence rates at times $t_{-m}$ to $t_{-1}$ are approximated by the n-th functions $g_R(t)$, and each of the function values $g_R(t_p)$ of the approximation functions (n-th functions) at t = tp is derived. Then the change rates $v_{Rp}$ of incidence rates at time $t_p$ are obtained from these four function values $g_R(t_p)$. Following this, the transition models $T_R$ are changed by calculating the probabilities $u_{R,R'}$ of the road surface conditions transiting from R to R' by use of the change rates $v_{Rp}$ of incidence rates.

Or the change rates $v_{Rp}$ of incidence rates at time $t_p$ may be obtained by use of the computing equation of the change rates $v_{R-k}$ of incidence rates, for instance, using the mean value or linear combination of the change rates $v_{R-m},\ldots\ldots, v_{R-2}, v_{R-1}$ of incidence rates.

Also, in the foregoing sixth embodiment, the incidence rate predicted values $S_{RpT}$ are calculated using the incidence rates $S_{R-1}$ at time $t_{-1}$ and the transition probabilities $u_{R,R'}$. However, the road surface condition may be predicted using the preceding predicted rates $V_{R-1}$, which are the predicted incidence rates at time $t_{-1}$, and the transition probabilities $u_{R,R'}$.

Also, the transition probabilities $u_{R,R'}$ may be changed according to information on the geography and on the weather and temperature supplied as weather forecast.

Thus far, the invention has been described with reference to specific embodiments thereof. However, the technical scope of the invention is not limited to the described scope of the embodiments. And it should be evident to those skilled in the art that various modifications, changes, and improvements may be made thereto without departing from the spirit and scope of the invention.

For example, the foregoing first to sixth embodiments are not limited to the classification of the statistical data of estimated road surface conditions into the four conditions of DRY road surface, WET road surface, SNOW road surface, and ICE road surface. The classification may be done by the road surface friction coefficient or into "high-$\mu$ road ($\mu \geqq 0.7$)", "intermediate-$\mu$ road ($0.3 < \mu < 0.7$)", "low-$\mu$ road ($\mu \leqq 0.3$)", for instance.

Also, in the foregoing first to sixth embodiments, predicted values $S_{Rp}$ of incidence rates of the road surface conditions R at time $t_p$ are obtained from the time-dependent changes in the incidence rates $S_{Rk}$ of the estimated road surface conditions being R from time $t_{-10}$ to $t_{-1}$ estimated by the road surface condition estimating means 13 provided in each of a plurality of vehicles $W_i$. However, in the place of the road surface condition estimating means 13, a decision value estimating means for estimating road surface estimation decision values K used in estimating road surface conditions R may be provided in each of the vehicles $W_i$. And the predicted values $K_p$ of the road surface estimation decision values at time $t_p$ may be obtained from the road surface estimation decision values $K_k$ from time $t_{-10}$ to time $t_{-1}$. And a road surface condition $R_p$ at time $t_p$ may be predicted from the predicted values $K_p$.

Also, in the foregoing first to sixth embodiments, a road surface condition estimating means 13 is provided in each of vehicles $W_i$. However, the arrangement may be such that a road surface condition estimating means 13 is provided at the road surface condition management center 2 and a plurality of band values used in estimating road surface conditions (vibration levels of specific frequency bands detected from acceleration waveform) or the calculated values of the band values are sent to the road surface condition management center 2.

By this arrangement, it is no longer necessary to install the road surface condition estimating means 13 within the tire 40, and thus the system within the tire can be made lighter in weight.

Also, in the foregoing first to sixth embodiments, a road surface condition determining unit is used which is configured to estimate the road surface condition to be one of the DRY road surface, WET road surface, SNOW road surface, and ICE road surface from the values of identification (discriminant) functions using kernel functions. However, other road surface condition determining means may be used. For example, such a road surface condition estimating unit may be configured to estimate the road surface friction coefficient $\mu$ by comparing the vibration level of vibration spectrum obtained by applying a frequency analysis to the time-series waveform of acceleration detected by the acceleration sensor 11 against a G-table showing the predetermined relationship between the road surface friction coefficient $\mu$ and the vibration level. Or such other road surface condition estimating unit may be configured to estimate the road surface condition from the time-series waveform supplied by an acceleration sensor attached to the tire or rim.

Or such a road surface estimating means may detect the tire noise arising from the running tire. And by comparing the mean value of sound pressure levels within a set frequency range of the detected tire noise against the reference sound pressure levels, it may estimate whether the road surface is an asphalt road amply wet with water, a slightly wet asphalt road, a dry asphalt road, or an ice-covered road.

A method for predicting a road surface condition according to an embodiment of the present invention includes the step of obtaining vehicular information, which is information on the behavior of a traveling vehicle by an on-board sensor mounted on the vehicle and the step of predicting a road surface condition of a location within a predetermined range, using road surface estimation decision values to be used in estimating road surface conditions, which are calculated using the vehicular information, or the estimated road surface conditions estimated using the road surface estimation decision values. In the step of predicting the road surface condition, predicted incidence rates $S_{Rp}$ for respective road surface conditions, which are the incidence rates of road surface conditions at the location within the predetermined range, are calculated from the time-dependent changes in the road surface estimated values calculated using the vehicular information obtained by the vehicles having passed the location within the predetermined range or the time-dependent changes in the estimated road surface conditions, and then the road surface condition at the location within the predetermined range is predicted from the calculated predicted incidence rates $S_{Rp}$.

The suffix k of time $t_k$ refers to times (past) before the present time to when k < 0 and times (future) after the present time to when k > 0. It is to be noted that at the present time t = to, no vehicular information is assumed to be available yet. Also, it is to be appreciated that the road surface condition at the location within the predetermined range to be predicted refers to the future road surface condition $R(t_p)$, which is the road surface condition at time $t_p$ (p > 0), or the present time t.

Also, the road surface estimation decision values (or estimated road surface conditions) at time $t_k$ refer to the road surface estimation decision values (or estimated road surface conditions) obtained within the time width $\Delta t_k$ including time $t_k$ (for example, $t_k - \Delta t_k/2 \leqq t \leqq t_k + \Delta t_k/2$).

In this manner, a future road surface condition at a location within a predetermined range is predicted using the road surface estimation decision values at a plurality of times obtained at the location within the predetermined range or the time-dependent changes in the estimated road surface conditions. Therefore, a future road surface condition can be predicted with excellent accuracy.

Also, in a method for predicting a road surface condition according to another embodiment of the present invention, the incidence rate predicted values $V_{Rp}$, which are the corrected values of predicted incidence rates $S_{Rp}$, are calculated by correcting the predicted incidence rates $S_{Rp}$ of road surface conditions at the location within the predetermined range by use of the pre-set transition probabilities $q'_{RR'}$ of estimated road surface conditions or the predetermined transition probabilities $q_{RR'}$ of estimated road surface conditions and the preceding incidence rates $V_{R-1}$, which are the predicted incidence rates at time $t_{-1}$ before the time $t_p$ at which the road surface condition is predicted.

In this manner, the predicted incidence rates $S_{Rp}$ at the location within the predetermined range are corrected using the pre-set transition probabilities $q'_{RR'}$ of estimated road surface conditions or the predetermined transition probabilities $q_{RR'}$ of estimated road surface conditions and the already calculated preceding incidence rates $V_{R-1}$. As a result, it is possible to predict a future road surface condition with excellent accuracy.

A method for predicting a road surface condition according to still another embodiment of the present invention includes the step of obtaining vehicular information, which is information on the behavior of a traveling vehicle by an on-board sensor mounted on the vehicle and the step of predicting a road surface condition at a location within a predetermined range, using road surface estimation decision values to be used in the estimation of road surface conditions, which are calculated using the vehicular information, or the estimated road surface conditions estimated using the road surface estimation decision values. In the step of predicting a road surface condition, a road surface condition at the location within the predetermined range at a time after a predetermined time is predicted from the estimated road surface conditions estimated using vehicular information obtained by vehicles having passed the location within the predetermined range and the pre-set transition probabilities of estimated road surface conditions or the predetermined transition probabilities for the estimated road surface conditions.

In this manner, the road surface condition at time $t_p$ is predicted using the pre-set transition probabilities $q'_{RR'}$ of estimated road surface conditions or the predetermined transition probabilities $q_{RR}$ of estimated road surface conditions. Thus, it is possible to predict the road surface condition at time $t_p$ easily.

Also, in a method for predicting a road surface condition according to still another embodiment of the present invention, the pre-set transition probabilities $q'_{RR'}$ of estimated road surface conditions or the predetermined transition probabilities $q_{RR'}$ of estimated road surface conditions are corrected using the incidence rates of road surface conditions estimated based on the vehicular information obtained at a time before the time at which the road surface condition is predicted.

In this manner, by correcting the transition probabilities $q'_{RR'}$ or the transition probabilities $q_{RR'}$ by the actually determined incidence rates of road surface conditions, the accuracy in predicting a future road surface condition can be further improved.

Also, in another method, the predicted road surface condition R ($t_p$) is corrected based on weather forecast information, such as weather, temperature, rainfall, wind speed, and sunshine hours.

Here, "correction" means determining whether or not the predicted road surface condition changes with the information on weather or temperature provided as the weather forecast, and when there is any change, predicting which of the road surface conditions will show up.

In this manner, the predicted road surface condition is corrected based on the weather forecast information. Therefore, the accuracy in predicting a road surface condition can be improved further.

Also, the information to be used in correction may include the estimation results of road surface conditions at other locations within a predetermined range. More specifically, among the past conditions (weather, traffic volume, estimation results of road surface conditions), the estimation results of road surface conditions at the location B within a predetermined range having a correlation to the location A within a predetermined range may be used to correct the estimation result at the location A within a predetermined range.

Also, in a method for predicting a road surface condition according to yet another embodiment of the present invention, a road surface condition $R(t_p)$ at a time tq ($t_q > t_p$) even after the time $t_p$ at which a prediction is made is predicted using the predicted road surface condition R(t$_p$).

In this manner, by repeating the prediction of a road surface condition using the predicted results, a future road surface condition can be further predicted.

It is to be understood that the foregoing summary of the invention does not necessarily recite all the features essential to the invention, and subcombinations of all these features are intended to be included in the invention.

INDUSTRIAL APPLICABILITY

As described herein, the present invention provides methods for determining a road surface condition within a predetermined space of time at a location within a predetermined range with excellent accuracy. Therefore, the travel safety of vehicles may be improved if the determination results are communicated to the vehicles traveling along the location within the predetermined range.

Description of Reference Numerals

| | |
|---|---|
| 1 | road surface condition predicting system |
| 2 | road surface condition management center |
| W$_1$ to W$_N$ | vehicle |
| 11 | acceleration sensor |
| 12 | GPS unit |
| 13 | road surface condition estimating means |
| 14 | vehicular information collecting means |
| 15 | transmitter |
| 16 | receiver |
| 20 | server |
| 21 | receiver |
| 22 | data storage means |
| 23 | transmitter |
| 30 | road surface condition predicting unit |
| 31 | statistical data generating means |
| 32 | determination result storage means |
| 33 | predicted statistical data generating means |
| 34 | road surface condition predicting means |
| 35 | weather correction means |
| 35a | weather forecast data obtaining unit |
| 35b | weather model storage unit |
| 35c | weather correction unit |
| 36 | predicted value correction means |
| 36a | transition model storage unit |
| 36b | incidence rate predicted value calculating unit |
| 36c | predicted value correction unit |
| 40 | tire |
| 41 | inner liner |
| 42 | tire air chamber |
| 43 | tread |
| 44 | rim |

**Claims**

**1.**   A method for predicting a road surface condition comprising:

obtaining vehicular information, which is information on the behavior of a vehicle during travel by an on-board sensor mounted thereon; and
predicting a road surface condition at a location within a predetermined range, using road surface estimation decision values to be used in estimating road surface conditions, which are calculated using the vehicular information, or the estimated road surface conditions estimated using the road surface estimation decision values,

wherein, in the step of predicting a road surface condition, predicted incidence rates of respective road surface conditions, which are the incidence rates of the road surface conditions at the location within the predetermined range, are calculated from time-dependent changes in the road surface estimation decision values calculated using the vehicular information obtained by vehicles having passed the location within the predetermined range or the time-dependent changes in the estimated road surface conditions, and then a road surface condition at the location within the predetermined range is predicted from the calculated predicted incidence rates.

2. The method for predicting a road surface condition according to claim 1, wherein the predicted incidence rates of the road surface conditions predicted for the location within the predetermined range are corrected, using pre-set transition probabilities of estimated road surface conditions or predetermined transition probabilities of estimated road surface conditions and preceding incidence rates, which are the predicted incidence rates at times before the time of predicting the road surface condition.

3. A method for predicting a road surface condition comprising:

obtaining vehicular information, which is information on the behavior of a vehicle during travel by an on-board sensor mounted thereon; and

predicting a road surface condition at a location within a predetermined range, using road surface estimation decision values to be used in estimating road surface conditions, which are calculated using the vehicular information, or the estimated road surface conditions estimated using the road surface estimation decision values,

wherein, in the step of predicting a road surface condition, a road surface condition at the location within the predetermined range at a time after a predetermined time is predicted from the estimated road surface conditions estimated using the vehicular information obtained by vehicles having passed the location within the predetermined range and the pre-set transition probabilities of estimated road surface conditions or the predetermined transition probabilities of estimated road surface conditions.

4. The method for predicting a road surface condition according to claim 3, wherein the pre-set transition probabilities of estimated road surface conditions or the predetermined transition probabilities of estimated road surface conditions are corrected using the incidence rates of road surface conditions estimated based on the vehicular information obtained at a time before the time of predicting the road surface condition.

5. The method for predicting a road surface condition according to any of claims 1 to 4, wherein a predicted road surface condition or a corrected road surface condition is corrected based on information of weather forecast.

6. The method for predicting a road surface condition according to any of claims 1 to 5, wherein a road surface condition at a time further after the time at which a prediction is made is predicted using predicted road surface conditions or corrected road surface conditions.

7. A system for predicting a road surface condition comprising:

an on-board sensor mounted on a vehicle and configured to obtain vehicular information, which is information on the behavior of the vehicle during travel; and
a road surface condition predicting unit for predicting a road surface condition at a location within a predetermined range, using the estimated road surface conditions estimated using road surface estimation decision values for estimating road surface conditions calculated using the vehicular information, or the estimated road surface conditions estimated using the road surface estimation decision values,
wherein the road surface condition predicting unit includes:

a predicted incidence rate calculating means for calculating predicted incidence rates of respective road surface conditions, which are the incidence rates of road surface conditions at the location within the predetermined range, from time-dependent changes in the road surface estimation decision values calculated using the vehicular information obtained by the vehicles having passed the location within the predetermined range or the time-dependent changes in the estimated road surface conditions; and
a road surface condition predicting means for predicting a road surface condition at the location within the predetermined range from the calculated predicted incidence rates.

8. A system for predicting a road surface condition comprising:

an on-board sensor mounted on a vehicle and configured to obtain vehicular information, which is information on the behavior of the vehicle during travel; and

a road surface condition predicting unit for predicting a road surface condition within a predetermined range, using estimated road surface conditions estimated using road surface estimation decision values for estimating road surface conditions calculated using the vehicular information, or estimated road surface conditions estimated using the road surface estimation decision values,

wherein the road surface condition predicting unit predicts the road surface condition at the location within the predetermined range at a time after the predetermined time from the estimated road surface conditions estimated using the vehicular information obtained by vehicles having passed the location within the predetermined range and the pre-set transition probabilities of estimated road surface conditions or the predetermined transition probabilities of the estimated road surface conditions.

FIG. 1

1: ROAD SURFACE CONDITION
   PREDICTING SYSTEM

VEHICLE $W_1$

VEHICLE $W_2$

VEHICLE $W_i$

ACCELERATION
SENSOR — 11

ROAD SURFACE
CONDITION
ESTIMATING MEANS — 13

GPS UNIT — 12

VEHECULAR
INFORMATION
COLLECTING
MEANS — 14

TRANSMITTER — 15

RECEIVER — 16

2: ROAD SURFACE CONDITION
   MANAGEMENT CENTER

20: SERVER

RECEIVER — 21

TRANSMITTER — 23

DATA STORAGE MEANS — 22

30: ROAD SURFACE CONDITION
    PREDICTING UNIT

STATISTICAL DATA
GENERATING MEANS — 31

ACTUAL STATISTICAL
DATA STORAGE MEANS — 32

PREDICTED STATISTICAL
DATA GENERATING MEANS — 33

ROAD SURFACE CONDITION
PREDICTING MEANS — 34

VEHICLE $W_N$

FIG. 2

1 2
4 4
4 0
4 2
4 1
1 1
4 3

FIG. 3A

13K: ROAD SURFACE CONDITION
ESTIMATING UNIT

~ 1 1

| ACCELERATION
SENSOR |

~ 1 3 1

| VIBRATION WAVEFORM
EXTRACTING MEANS |

~ 1 3 2

| WINDOWING
MEANS |

~ 1 3 3

| FEATURE VECTOR
CALCULATING MEANS |

~ 1 3 4

| DRY ROAD
SURFACE MODEL |

| WET ROAD
SURFACE MODEL |

| SNOW ROAD
SURFACE MODEL |

| ICE ROAD
SURFACE MODEL |

~ 1 3 5

| KERNEL FUNCTION
CALCULATING MEANS |

~ 1 3 6

| ROAD SURFACE CONDITION
DETERMINING MEANS |

FIG. 3B

VIBRATION LEVEL [dBG]

T    T    T    T    T    T

TIME [sec.]

$X_1$    $X_2$    $X_3$    $X_4$

FIG. 4

# FIG. 5A

| ACTUAL STATISTICAL DATA | $M_{-10}$ | $M_{-9}$ | $M_{-8}$ | $M_{-7}$ | $M_{-6}$ | $M_{-5}$ | $M_{-4}$ | $M_{-3}$ | $M_{-2}$ | $M_{-1}$ |
|---|---|---|---|---|---|---|---|---|---|---|
| INCIDENCE RATE / TIME | $t_{-10}$ | $t_{-9}$ | $t_{-8}$ | $t_{-7}$ | $t_{-6}$ | $t_{-5}$ | $t_{-4}$ | $t_{-3}$ | $t_{-2}$ | $t_{-1}$ |
| DRY ; $S_{D-k}$ | 0.73 | 0.80 | 0.88 | 0.75 | 0.70 | 0.71 | 0.60 | 0.58 | 0.55 | 0.50 |
| WET ; $S_{W-k}$ | 0.22 | 0.12 | 0.10 | 0.20 | 0.23 | 0.20 | 0.39 | 0.40 | 0.41 | 0.45 |
| SNOW ; $S_{S-k}$ | 0.03 | 0.04 | 0.01 | 0.02 | 0.03 | 0.05 | 0.01 | 0.01 | 0.03 | 0.02 |
| ICE ; $S_{I-k}$ | 0.02 | 0.04 | 0.01 | 0.03 | 0.04 | 0.04 | 0.00 | 0.01 | 0.01 | 0.03 |

# FIG. 5B

$M_{pC}$

| | PREDICTION RESULTS AT $t = tp$ |
|---|---|
| DRY ; $S_{Dp}$ | 0.51 |
| WET ; $S_{Wp}$ | 0.43 |
| SNOW ; $S_{Sp}$ | 0.02 |
| ICE ; $S_{Ip}$ | 0.04 |

FIG. 6

```
         ┌─────────────┐
         (   START     )
         └──────┬──────┘
                │         ╭─ S10
       ┌────────┴────────┐
       │ OBTAIN VEHICULAR│
       │ INFORMATION     │
       └────────┬────────┘
                │      ╭─ S11
         ┌──────┴──────┐
         │ TRANSMIT    │
         │ INFORMATION │
         └──────┬──────┘
                │              ╭─ S12
    ┌───────────┴──────────────────┐
    │ STORE VEHICULAR INFORMATION FOR│
    │ LOCATIONS AND IN ORDER OF TIME │
    └───────────┬──────────────────┘
                │
   S13 ╮        │◄──────────────────────┐
    ┌───┴────────────────┐              │
    │ GENERATE ACTUAL    │              │
    │ STATISTICAL DATA AND│             │
    │ ARRANGE IN TIME SERIES│           │
    └───────────┬────────┘              │
                │        ╭─ S14         │
    ┌───────────┴──────────────┐        │
    │ FUNCTIONALLY APROXIMATE TIME-│     │
    │ DEPENDENT CHANGES IN ESTIMATED│    │
    │ ROAD SURFACE CONDITIONS      │     │
    └───────────┬──────────────┘        │
                │       ╭─ S15          │
      ┌─────────┴───────┐               │
      │ FIND PREDICTED  │               │
      │ INCIDENCE RATES │               │
      └─────────┬───────┘               │
                │      ╭─ S16           │
      ┌─────────┴───────┐               │
      │ PREDICT ROAD    │               │
      │ SURFACE CONDITION│              │
      └─────────┬───────┘               │
                │         ╭─ S17        │
            ╱───┴───╲                   │
          ╱   END OF   ╲                │
         ╱  PREDICTION   ╲──── No ──────┘
          ╲             ╱
            ╲───┬───╱
               Yes
                │
         ┌──────┴──────┐
         (   END       )
         └─────────────┘
```

FIG. 7

1: ROAD SURFACE CONDITION
   PREDICTING SYSTEM

VEHICLE W₁

VEHICLE W₂

⋮

2: ROAD SURFACE CONDITION
   MANAGEMENT CENTER

VEHICLE Wᵢ

11 ACCELERATION SENSOR

13 ROAD SURFACE CONDITION ESTIMATING MEANS

14 VEHICULAR INFORMATION COLLECTING MEANS

12 GPS UNIT

15 TRANSMITTER

16 RECEIVER

⋮

VEHICLE Wₙ

20: SERVER

21 RECEIVER

23 TRANSMITTER

22 DATA STORAGE MEANS

30: ROAD SURFACE CONDITION PREDICTING UNIT

31 STATISTICAL DATA GENERATING MEANS

32 ACTUAL STATISTICAL DATA STORAGE MEANS

33 PREDICTED STATISTICAL DATA GENERATING MEANS

35: WEATHER CORRECTION MEANS

35a WEATHER FORECAST DATA OBTAINING UNIT

35b WEATHER MODEL STORAGE UNIT

35c WEATHER CORRECTION UNIT

34 ROAD SURFACE CONDITION PREDICTING MEANS

23

# FIG. 8A

DRY MODEL: $M_D$

# FIG. 8B

WET MODEL: $M_W$

# FIG. 8C

SNOW MODEL: $M_S$

# FIG. 8D

ICE MODEL: $M_I$

FIG. 9A

FIG. 9B

## FIG. 10

| | PREDICTION RESULTS AT t = tp |
|---|---|
| DRY ; $S_{Dp}$ | 0.51 |
| WET ; $S_{Wp}$ | 0.43 |
| SNOW ; $S_{Sp}$ | 0.02 |
| ICE ; $S_{Ip}$ | 0.04 |
| WEATHER FORECAST — WEATHER | RAINY |
| WEATHER FORECAST — TEMPERATURE | 1℃ |

T=1℃ ;RAINY

D W S I

| | PREDICTION RESULTS AFTER WEATHER CORRECTION |
|---|---|
| DRY ; $S_{Dpz}$ | 0.27 |
| WET ; $S_{Wpz}$ | 0.70 |
| SNOW ; $S_{Spz}$ | 0.01 |
| ICE ; $S_{Ipz}$ | 0.02 |

## FIG. 11

1: ROAD SURFACE CONDITION PREDICTING SYSTEM

2: ROAD SURFACE CONDITION MANAGEMENT CENTER

VEHICLE $W_1$

VEHICLE $W_2$

20: SERVER

21 RECEIVER 23 TRANSMITTER

22 DATA STORAGE MEANS

VEHICLE $W_i$

11 ACCELERATION SENSOR

13 ROAD SURFACE CONDITION ESTIMATING MEANS

14 VEHICULAR INFORMATION COLLECTING MEANS

12 GPS UNIT

15 TRANSMITTER

16 RECEIVER

30:ROAD SURFACE CONDITION PREDICTING UNIT

31 STATISTICAL DATA GENERATING MEANS

32 ACTUAL STATISTICAL DATA STORAGE MEANS

33 PREDICTED STATISTICAL DATA GENERATING MEANS

36 MAP STORAGE MEANS

37 DEGREE OF MATCHING CALCULATING MEANS

35:WEATHER CORRECTION MEANS

35a WEATHER FORECAST DATA OBTAINING UNIT

35b WEATHER MODEL STORAGE UNIT

35d WEATHER PROBABILITY ADDING UNIT

34 ROAD SURFACE CONDITION PREDICTING MEANS

VEHICLE $W_N$

FIG. 12

REFERENCE MAPS

## FIG. 13

1: ROAD SURFACE CONDITION
   PREDICTING SYSTEM

2: ROAD SURFACE CONDITION .
   MANAGEMENT CENTER

VEHICLE $W_1$

VEHICLE $W_2$

20: SERVER

RECEIVER — 21

TRANSMITTER — 23

DATA STORAGE MEANS — 22

VEHICLE $W_i$

ACCELERATION SENSOR — 11

ROAD SURFACE CONDITION ESTIMATING MEANS — 13

VEHECULAR INFORMATION COLLECTING MEANS — 14

GPS UNIT — 12

TRANSMITTER — 15

RECEIVER — 16

30: ROAD SURFACE CONDITION PREDICTING UNIT

STATISTICAL DATA GENERATING MEANS — 31

38: ROAD SURFACE CONDITION TRANSITION PREDICTING MEANS

TRANSITION MODEL STORAGE UNIT — 38a

INCIDENCE RATE PREDICTED VALUE CALCULATING UNIT — 38b

ROAD SURFACE CONDITION PREDICTING MEANS — 34

VEHICLE $W_N$

FIG. 14

| | TRANSITION PREDICTION RESULTS |
|---|---|
| DRY; $S_{Dpt}$ | 0.48 |
| WET; $S_{Wpt}$ | 0.36 |
| SNOW; $S_{Spt}$ | 0.08 |
| ICE; $S_{Ipt}$ | 0.08 |

| | INCIDENCE RATES AT t = t-1 |
|---|---|
| DRY; $S_{D-1}$ | 0.50 |
| WET; $S_{W-1}$ | 0.45 |
| SNOW; $S_{S-1}$ | 0.02 |
| ICE; $S_{I-1}$ | 0.03 |

$T_D$   $q_{D,R'}$ ; DRY⇒R'

$T_W$   $q_{W,R'}$ ; WET⇒R'

$T_S$   $q_{S,R'}$ ; SNOW⇒R'

$T_I$   $q_{I,R'}$ ; ICE⇒R'

FIG. 15

FIG. 16

## INTERNATIONAL SEARCH REPORT

International application No.

PCT/JP2015/079029

| A. CLASSIFICATION OF SUBJECT MATTER |
|---|
| *G01W1/10*(2006.01)i, *B60T8/172*(2006.01)i, *G08G1/01*(2006.01)i, *G08G1/13* (2006.01)i |

According to International Patent Classification (IPC) or to both national classification and IPC

| B. FIELDS SEARCHED |
|---|
| Minimum documentation searched (classification system followed by classification symbols) |
| G01W1/00-1/10, B60T8/172, G08G1/01, G08G1/13 |

Documentation searched other than minimum documentation to the extent that such documents are included in the fields searched

| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2006-017502 A (Japan Weather Association), 19 January 2006 (19.01.2006), entire text; all drawings (Family: none) | 1-8 |
| A | JP 2004-198188 A (Yokogawa Denshikiki Co., Ltd.), 15 July 2004 (15.07.2004), entire text; all drawings (Family: none) | 1-8 |
| A | JP 2006-030139 A (Japan Weather Association), 02 February 2006 (02.02.2006), entire text; all drawings (Family: none) | 1-8 |

| [×] Further documents are listed in the continuation of Box C. | [ ] See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 25 December 2015 (25.12.15) | 12 January 2016 (12.01.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2015/079029

C (Continuation).   DOCUMENTS CONSIDERED TO BE RELEVANT

| Category* | Citation of document, with indication, where appropriate, of the relevant passages | Relevant to claim No. |
|---|---|---|
| A | US 6919821 B1  (NAVTEQ NORTH AMERICA, LLC),<br>19 July 2005 (19.07.2005),<br>entire text; all drawings<br>(Family: none) | 1-8 |
| A | US 2009/0312943 A1  (KELLY, Terence F. et al.),<br>17 December 2009 (17.12.2009),<br>entire text; all drawings<br>(Family: none) | 1-8 |
| A | US 2014/0081573 A1  (GOOGLE INC.),<br>20 March 2014 (20.03.2014),<br>entire text; all drawings<br>& JP 2015-535204 A       & WO 2014/047250 A1<br>& EP 2897845 A1          & KR 10-2015-0058431 A<br>& CN 104768822 A | 1-8 |
| A | JP 2011-242303 A  (Bridgestone Corp.),<br>01 December 2011 (01.12.2011),<br>entire text; all drawings<br>& US 2013/0116972 A1      & WO 2011/145356 A1<br>& EP 2573594 A1           & CN 103003110 A | 1-8 |

Form PCT/ISA/210 (continuation of second sheet) (July 2009)

**EP 3 208 638 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014035279 A
- JP 2011242303 A
- JP 2003182476 A
- JP 8261993 A